# EUROPEAN PATENT APPLICATION

(11) **EP 4 749 427 A1**
(43) Date of publication of application: **27.05.2026**
(21) Application number: 24909730.4
(22) Date of filing: 30.07.2024
(51) Int. Cl.: G06F 3/12

(54) **PRINTER CONTROL METHOD, ELECTRONIC DEVICE, AND SYSTEM**

(30) Priority: 28.12.2023 CN 202311854523
(71) Applicant: Honor Device Co., Ltd., Shenzhen, Guangdong 518040 (CN)
(72) Inventor: ZHANG, Guoyue, Shenzhen, Guangdong 518040 (CN)
(74) Representative: Henselmann, Alexander Gerhard
(86) International application number: PCT/CN2024/108484
(87) International publication number: WO 2025/138776

(57) **Abstract**

This application provides a printer control method, an electronic device, and a system. The printer control method may be applied to a mobile terminal such as a mobile phone and a tablet computer and a system of a printer. In a process of discovering the printer, a terminal device may obtain a product identifier of the printer. Based on the foregoing product identifier, the terminal device may determine a protocol type of the printer, to further obtain a protocol packet matching the protocol type of the printer, and send, to the printer through the foregoing protocol packet, configuration information of a local area network in which the terminal device is currently located, to control the printer to access a network. Then, the terminal device may control, through a printing standard mopria protocol packet or a protocol packet provided by a printer manufacturer, the foregoing printer to execute a printing task. When the printer manufacturer does not provide the protocol packet, the terminal device may control, through the mopria protocol packet, the foregoing printer to execute the printing task.

## Description

This application claims priority to Chinese Patent Application No. 202311854523.8, filed with the China National Intellectual Property Administration on December 28, 2023 and entitled "PRINTER CONTROL METHOD, ELECTRONIC DEVICE, AND SYSTEM", which is incorporated herein by reference in its entirety.

### TECHNICAL FIELD

This application relates to the field of terminals, and in particular, to a printer control method, an electronic device, and a system.

### BACKGROUND

After purchasing a printer, a user usually needs to download, from a mobile terminal, a specific application provided by a printer manufacturer, and then configures a network for the printer through the application, to control the printer to execute a printing task. On this basis, when a plurality of printers of different manufacturers are purchased at the same time, or when a printer of a manufacturer is replaced with a printer of another manufacturer, the user needs to download a plurality of applications. One application is used for controlling a printer of one manufacturer.

This not only causes redundancy encroachment on a storage space of a terminal device, but also increases user operations. After the user determines to use a printer, the user opens a corresponding application, and sends, through the application, a target file that the user intends to print to the printer that the user intends to use. If the application opened by the user does not match the printer that the user intends to use, the target file may be incorrectly sent to another printer, seriously affecting user experience.

### SUMMARY

According to a first aspect, this application provides a printing method, and the method is applied to an electronic device. The method includes: displaying a first interface of a first application, where the first interface includes a first icon and a second icon, the first icon corresponds to a first printer, the second icon corresponds to a second printer, the first printer corresponds to a first protocol, and the second printer corresponds to a second protocol; loading a first protocol packet before a user operation on the first icon is detected, where the first protocol packet corresponds to the first protocol; sending, after the user operation on the first icon is detected, a target file selected by a user to the first printer through the first protocol packet; and loading, after a user operation on the second icon is detected, a second protocol packet, and sending the target file selected by the user to the second printer through the second protocol packet, where the second protocol packet corresponds to the second protocol.

By implementing the method provided in the first aspect, the electronic device may control, through one application (the first application), printers using different protocols to execute a printing task, so that the user does not need to download a plurality of applications. The electronic device controls, through different applications, the printers using different protocols to execute the printing task, thereby saving user operations, and improving user experience.

In some embodiments, before the first interface of the first application is displayed, the method further includes: starting a first application; and the loading a first protocol packet is specifically: loading the first protocol packet in a process of starting the first application. In a case that the first application is not running, that is, a process of the first application does not exist in the electronic device, an operation of the user corresponding to an icon of the first application is received, and the electronic device may start the first application. It may be understood that, after receiving the operation of the user corresponding to the icon of the first application, the electronic device runs program code of the first application before displaying a main interface of the first application, which is referred to as a process of starting the first application.

The electronic device may load a protocol packet (the first protocol packet) when starting an application. In this way, when the user selects a printer, and the printer corresponds to the foregoing first protocol packet, the electronic device may directly send the target file to the foregoing printer through the foregoing first protocol packet without temporary loading.

Preferably, the first protocol is a printing standard mopria, and the first protocol packet is a mopria protocol packet.

In some embodiments, before the first interface of the first application is displayed, the method further includes: discovering the first printer; and loading a third protocol packet after the first printer is discovered, and sending first configuration information to the first printer through the third protocol packet, where the first configuration information includes a name and a password of a local area network in which the electronic device is currently located.

The electronic device may configure a network for a printer and control the printer to execute a printing task through different protocol packets.

In some embodiments, before the third protocol packet is loaded, the method further includes: downloading the third protocol packet from a first server, where the third protocol packet is different from the first protocol packet.

The electronic device may download a required protocol packet from a server (the first server). Preferably, the first server is a developer platform. In this way, the electronic device does not need to preset a plurality of protocol packets, thereby avoiding encroachment on a storage space of the electronic device.

With reference to the method provided in the first aspect, in some embodiments, the discovering the first printer includes: detecting a detection frame transmitted by the first printer, where the detection frame carries a product identifier of the first printer; and before the third protocol packet is loaded, the method further includes: determining, based on the product identifier, that the first printer further corresponds to a third protocol, where the third protocol packet corresponds the third protocol packet.

The electronic device may find a printer through a detection frame of the printer, and determine, through a product identifier carried in the detection frame, which protocol is used by the printer, to further determine which protocol packet is used to communicate with the printer.

In some embodiments, the determining, based on the product identifier, that the first printer further corresponds to a third protocol specifically includes: sending the product identifier to a fourth server; and receiving a first type sent by a first server, where the first type indicates that the first printer further corresponds to the third protocol, and the first type is sent by the first server to the electronic device after receiving the product identifier sent by the electronic device.

The electronic device may determine a protocol type corresponding to the product identifier through a server (the fourth server). Preferably, the fourth server is a developer platform.

In some embodiments, before the first interface of the first application is displayed, the method further includes: discovering the second printer; and downloading, after the second printer is discovered, the second protocol packet corresponding to the second protocol from a second server, loading the second protocol packet, and sending first configuration information to the second printer through the second protocol packet, where the first configuration information includes a name and a password of a local area network in which electronic device is currently located.

The electronic device may configure a network for a printer and control the printer to execute a printing task through one protocol packet.

In some embodiments, before the first interface of the first application is displayed, the method further includes: discovering the second printer; and downloading, after the second printer is discovered, a fourth protocol packet corresponding to a fourth protocol from a third server, loading the fourth protocol packet, and sending first configuration information to the second printer through the fourth protocol packet, where the fourth protocol is different from the second protocol, and the first configuration information includes a name and a password of a local area network in which the electronic device is currently located.

In some embodiments, after the user operation on the first icon is detected, the method further includes: determining the first protocol packet based on a protocol type of the first printer.

In some embodiments, after a user operation on the second icon is detected, the method further includes: determining the second protocol packet based on a protocol type of the second printer; and the loading a second protocol packet specifically includes: loading the second protocol packet from a local memory after it is determined that the local memory stores the second protocol packet.

In some embodiments, the sending, after the user operation on the first icon is detected, a target file selected by a user to the first printer through the first protocol packet specifically includes: displaying a first floating control after the user operation on the first icon is detected; receiving a second operation of the user after the first floating control is displayed; displaying a second interface in response to the second operation, where the second interface includes a first file, and after the second operation of the user is received and in a process of displaying the second interface, a position of the first floating control remains unchanged; detecting a first operation on the first floating control when the first file is displayed; and determining, in response to the first operation, the first file as the target file, and sending the target file to the first printer through the first protocol packet.

The electronic device may determine, based on a file displayed when the user taps a floating control, a target file that the user intends to print, to provide new printing experience for the user.

In some embodiments, after the target file is sent to the first printer through the first protocol packet, the method further includes: displaying, in the first floating control, a progress of printing the target file by the first printer.

In some embodiments, before the first operation on the first floating control is detected, the method further includes: detecting a third operation on the first floating control; and displaying, in the first floating control, a first control in response to the third operation; and the detecting a first operation on the first floating control specifically includes: detecting the first operation on the first control in the first floating control.

In some embodiments, before the second protocol packet is loaded, the method further includes: confirming that a local memory does not store the second protocol packet, and downloading the second protocol packet from a second server.

When a protocol packet matching a printer is not locally stored, the electronic device may download again from a server (the second server).

In some embodiments, the electronic device includes a system setting module, the system setting module stores the first configuration information, and the first application reads the first configuration information from the system setting module.

The electronic device can automatically read configuration information such as a name and a password of a current local area network without inputting by a user, thereby saving user operations and helping the user quickly configure a network for a printer.

In some embodiments, the electronic device includes a printing service, and before the first interface of the first application is displayed, the method further includes: obtaining, by the first application, a printer list from the printing service, where the printer list includes an identifier of the first printer and an identifier of the second printer.

In some embodiments, the electronic device includes a printing service, the printing service includes the first protocol packet, and the determining, in response to the first operation, the first file as the target file, and sending the target file to the first printer through the first protocol packet specifically includes: determining, in response to the first operation, the first file as the target file, and sending a first request to the printing service; creating, by the printing service, a first channel in response to the first request; sending, by the first application, the target file to the printing service through the first channel; and sending, by the printing service, the target file to the first printer through the first protocol packet.

In some embodiments, the first request further carries a device identifier and a printing parameter of the first printer, and the printing service determines the first protocol packet based on the device identifier of the first printer; and the printing service further sends the printing parameter to the first printer through the first protocol packet.

According to a second aspect, this application provides a printing method, and the method is applied to an electronic device. The method includes: displaying a first interface of a first application, where the first interface includes a second icon and a third icon, the second icon corresponds to a second printer, the third icon corresponds to a third printer, the second printer corresponds to a second protocol, and the third printer corresponds to a fifth protocol; loading, after a user operation on the second icon is detected, a second protocol packet, and sending a target file selected by a user to the second printer through the second protocol packet, where the second protocol packet corresponds to the second protocol; and loading, after a user operation on the third icon is detected, a fifth protocol packet, and sending the target file selected by the user to the third printer through the fifth protocol packet, where the fifth protocol packet corresponds to the fifth protocol.

By implementing the method provided in the second aspect, the electronic device may control, through one application (the first application), printers using different protocols to execute a printing task, so that the user does not need to download a plurality of applications. The electronic device controls, through different applications, the printers using different protocols to execute the printing task, thereby saving user operations, and improving user experience.

In some embodiments, before the first interface of the first application is displayed, the method further includes: discovering the second printer; and downloading, after the second printer is discovered, the second protocol packet corresponding to the second protocol from a second server, loading the second protocol packet, and sending first configuration information to the second printer through the second protocol packet, where the first configuration information includes a name and a password of a local area network in which electronic device is currently located.

The electronic device may configure a network for a printer and control the printer to execute a printing task through one protocol packet.

In some embodiments, before the second protocol packet is loaded, the method further includes: confirming that a local memory does not store the second protocol packet, and downloading the second protocol packet from a second server.

When a protocol packet matching a printer is not locally stored, the electronic device may download again from a server (the second server).

In some embodiments, before the first interface of the first application is displayed, the method further includes: discovering the second printer; and downloading, after the second printer is discovered, a fourth protocol packet corresponding to a fourth protocol from a third server, loading the fourth protocol packet, and sending first configuration information to the second printer through the fourth protocol packet, where the fourth protocol is different from the second protocol, and the first configuration information includes a name and a password of a local area network in which the electronic device is currently located.

The electronic device may configure a network for a printer and control the printer to execute a printing task through different protocol packets.

In some embodiments, the electronic device includes a system setting module, the system setting module stores the first configuration information, and the first application reads the first configuration information from the system setting module.

The electronic device can automatically read configuration information such as a name and a password of a current local area network without inputting by a user, thereby saving user operations and helping the user quickly configure a network for a printer.

According to a third aspect, this application provides an electronic device. The electronic device includes one or more processors and one or more memories, where the one or more memories are coupled to the one or more processors, the one or more memories are configured to store a computer program, and the computer program, when executed by the one or more processors, causes the electronic device to perform the method described according to the first aspect and any possible implementation in the first aspect, or perform the method described according to the second aspect and any possible implementation in the second aspect.

According to a fourth aspect, an embodiment of this application provides a chip system, applied to an electronic device, where the chip system includes one or more processors, and the processors are configured to invoke computer instructions to cause the electronic device to perform the method described according to the first aspect and any possible implementation in the first aspect, or perform the method described according to the second aspect and any possible implementation in the second aspect.

According to a fifth aspect, an embodiment of this application provides a computer-readable storage medium, including a computer program. When run on an electronic device, the foregoing computer program causes the foregoing electronic device to perform the method described according to the first aspect and any possible implementation in the first aspect, or perform the method described according to the second aspect and any possible implementation in the second aspect.

According to a sixth aspect, an embodiment of this application provides a computer program product. When run on an electronic device, the foregoing computer program product causes the foregoing electronic device to perform the method described according to the first aspect and any possible implementation in the first aspect, or perform the method described according to the second aspect and any possible implementation in the second aspect.

It may be understood that, the electronic device provided in the foregoing third aspect, the chip system provided in the fourth aspect, the computer storage medium provided in the fifth aspect, and the computer program product provided in the sixth aspect are all configured to perform the method provided in this application. Therefore, for beneficial effects that can be achieved, refer to beneficial effects in the corresponding method, and details are not described herein again.

### BRIEF DESCRIPTION OF DRAWINGS

FIG. 1A is a schematic structural diagram of a network 10 according to an embodiment of this application;
FIG. 1B is a schematic structural diagram of a network 10 in another scenario according to an embodiment of this application;
FIG. 2A to FIG. 2C are schematic diagrams of a set of user interfaces that configure a network for a printer 202 through an electronic device 201 according to an embodiment of this application;
FIG. 3 is a flowchart of configuring a network for a printer 202 through an electronic device 201 according to an embodiment of this application;
FIG. 4A to FIG. 4G show a set of user interfaces that control printers to execute printing tasks through an electronic device 201 according to an embodiment of this application;
FIG. 5A to FIG. 5J show another set of user interfaces that control printers to execute printing tasks through an electronic device 201 according to an embodiment of this application;
FIG. 6 a schematic diagram of a software architecture of an electronic device 201 according to an embodiment of this application;
FIG. 7A is a flowchart of an electronic device 201 that controls a target printer to execute printing tasks according to an embodiment of this application;
FIG. 7B is a flowchart of specific loading of a three-party protocol packet according to an embodiment of this application;
FIG. 8 is a schematic structural diagram of an electronic device 201 according to an embodiment of this application; and
FIG. 9 is a schematic structural diagram of a printer 202 according to an embodiment of this application.

### DESCRIPTION OF EMBODIMENTS

Terms used in following embodiments of this application are only intended to describe particular embodiments, and are not intended to limit this application.

Nowadays, an increasing number of electronic devices support access to a network, to satisfy requirements of users on remote control.

Using a printer as an example, with the development of printing requirements, for example, printing homework or painting works of children, printers are increasingly set to support access to a home local area network, especially a home local area network based on wireless fidelity (wireless fidelity, Wi-Fi), that is, support network access through Wi-Fi configuration, so that a user remotely controls, through a mobile terminal such as a mobile phone or a tablet computer by hand, the printer to execute a printing task anywhere at any time.

Mopria is a type of mobile printing standard. A Mopria protocol packet is a piece of communication program code, and is used to provide a Mopria-based communication capability. The mobile terminal such as a mobile phone or a tablet computer is usually preset with the Mopria protocol packet, and the printer may be controlled to execute the printing task through the Mopria protocol packet.

However, before controlling the printer to execute the printing task through the Mopria protocol packet, the user first needs to configure a network for the printer. The Mopria protocol packet does not support configuring the network for the printer. In this case, each printer manufacturer needs to provide a protocol packet (a network configuration protocol packet for short hereinafter) used for configuring the network, so that the user configures the network for the printer through the mobile terminal such as a mobile phone or a tablet computer, thereby supporting the user to control the printer to execute the printing task through the mobile terminal.

In some technologies, after purchasing a printer, the user may download, from the mobile terminal, a specific application provided by a printer manufacturer. The network configuration protocol packet is preset in the application. The mobile terminal may configure the network for the foregoing printer through the foregoing application and network configuration protocol packet.

After network configuration succeeds, the mobile terminal may control the printer to execute the printing task through the Mopria protocol packet.

Based on network configuration, some printer manufacturers also continue to develop program code for controlling the printer to execute the printing task. In this case, a three-party protocol packet provided by the printer manufacturer is not only used for configuring the network for the printer, but also for controlling the printer to execute the printing task. A protocol packet provided by the printer manufacturer that can be used for both configuring the network for the printer and controlling the printer to execute the printing task may be referred to as a printing protocol packet.

In a scenario in which the printer manufacturer provides the printing protocol packet, after a network configuration operation is completed through the printing protocol packet, preferably, the mobile terminal may continue to control, through the foregoing printing protocol packet, the printer to execute the printing task, and does not need to control, through the Mopria protocol packet, the printer to execute the printing task.

A method of downloading a specific application, configuring a network for the printer through the specific application, and controlling the printer to execute the printing task is not only not beneficial to saving a storage space of the mobile terminal, but also requires complex user operations, especially in a scenario in which the user purchases printers of a plurality of different manufacturers at the same time, or replaces a printer of a manufacturer with a printer of another manufacturer.

In view of this, an embodiment of this application provides a device control method.

The method may be applied to an electronic device 201 and a printer 202. The electronic device 201 is preset with a Mopria protocol packet, and the printer may be controlled to execute a printing task through the Mopria protocol packet. Preferably, the electronic device 201 is a mobile terminal such as a mobile phone and a tablet computer. A specific type of the electronic device 201 is not specially limited in embodiments of this application. The printer 202 is a printer to be configured in a network.

By implementing the method provided in this application, after the printer 202 is powered on, the printer 202 may broadcast a detection frame. The detection frame may carry a product identifier (PrdID) of the printer 202. Preferably, printers of one model provided by one printer manufacturer may share one product identifier. The electronic device 201 may obtain the foregoing detection frame through scanning, to obtain the product identifier of the printer 202. The electronic device 201 may determine a protocol type of the printer 202 through the foregoing product identifier. Then, the electronic device 201 may obtain a three-party protocol packet matching the protocol type of the printer 202, and then configure the network for the printer 202 through the foregoing three-party protocol packet. After network configuration succeeds, the electronic device 201 may control, through the foregoing three-party protocol packet or a preset Mopria protocol packet, the printer 202 to execute the printing task.

In this way, the user does not need to manually download the specific application, and does not need to configure the network for the printer through the foregoing specific application and control the printer to execute the printing task. This is beneficial to saving the storage space of the electronic device 201 and saving user operations, thereby providing convenience for the user to control the printer 202 through the electronic device 201.

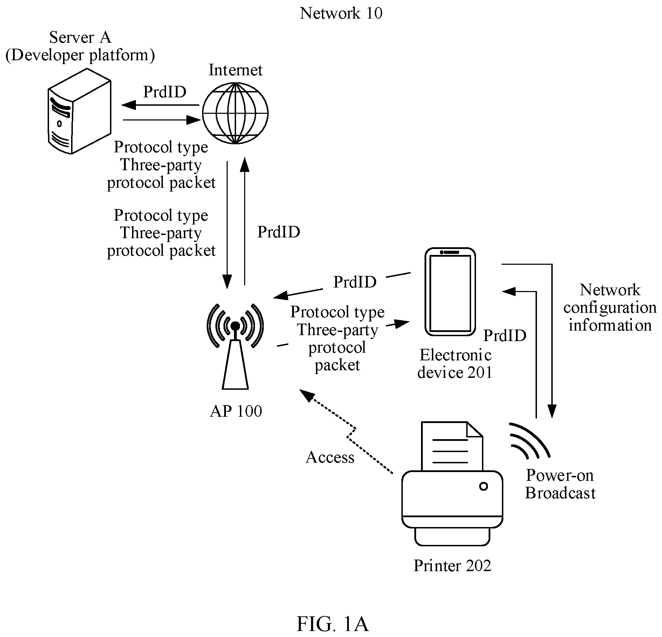

FIG. 1A is a schematic structural diagram of a network 10 according to an embodiment of this application.

As shown in FIG. 1A, the network 10 includes an access point (Access Point, AP) device 100 (denoted as an AP 100).

The AP 100 is connected to an access controller (Access Controller, AC) and a broadband remote application server (Broadband Remote Application Server, BRES) in a wired transmission manner, and obtains an Internet protocol (Internet Protocol, IP) address of the AP through a dynamic host configuration protocol (Dynamic Host Configuration Protocol, DHCP), to access the Internet (Internet).

The terminal device may establish a connection to the AP 100 in a wired or wireless manner, to access the Internet through the AP 100 and obtain a network service. Preferably, the AP 100 is a Wi-Fi-based AP.

The AP 100 includes configuration information such as a name and a password. The name is used for identifying the AP. The password is used for device authentication. When the AP 100 is connected, a terminal device applying for a connection needs to provide an access password to the AP 100. Only when the access password provided by the terminal device matches a password preset by the AP 100, the AP 100 allows the terminal device to access, and provides the network service for the terminal device. Otherwise, the AP 100 rejects a connection request of the terminal device. In this case, the terminal device cannot obtain the network service through the AP 100.

As shown in FIG. 1A, a communication connection is established between the electronic device 201 and the AP 100, and the network service may be obtained through the AP 100. Preferably, the foregoing connection is a wireless connection. The printer 202 is a device that is newly purchased by the user and whose network has not been configured. As shown in FIG. 1A, the printer 202 has not been connected to the AP 100.

After purchasing the printer 202, the user may connect the printer 202 to a power supply. A process in which the printer 202 is connected to the power supply is also referred to as a power-on process. After the printer 202 is powered on, the printer 202 may broadcast the detection frame. The detection frame of the printer 202 may carry device information of the printer 202. The foregoing device information includes, but is not limited to, a device identifier (denoted as DevID) and a product identifier (denoted as PrdID). The device identifier is used for uniquely identifying an electronic device, for example, an MAC address.

The electronic device 201 may periodically obtain the detection frame in an environment. In this case, the electronic device 201 may obtain the detection frame of the printer 202, and then obtain the product identifier of the printer 202 from the foregoing detection frame. Based on the foregoing product identifier, the electronic device 201 may determine the protocol type of the printer 202.

In an embodiment, as shown in FIG. 1A, a server A is connected to the AP 100 through the Internet. The server A is also referred to as a developer platform. The developer platform records a matching relationship between the product identifier of the printer and the protocol type. After the product identifier of the printer 202 is obtained, the electronic device 201 may send the foregoing product identifier to the developer platform. The developer platform may query a protocol type corresponding to the foregoing product identifier. The protocol type is the protocol type of the printer 202. The developer platform may send the foregoing protocol type back to the electronic device 201. Therefore, the electronic device 201 may determine the protocol type of the printer 202, that is, determine which protocol should be used to communicate with the printer 202, configure the network for the printer 202, and control the printer 202 to execute the printing task.

The developer platform further stores the three-party protocol packet provided by the printer manufacturer. After the protocol type of the printer 202 is determined, the electronic device 201 may further obtain a corresponding three-party protocol packet from the developer platform. The three-party protocol packet corresponding to the protocol type of the printer 202 may be referred to as a target protocol packet.

In some embodiments, the three-party protocol packet provided by the printer manufacturer may also be stored on another server. A protocol packet configuration file may be preset in the electronic device 201. The configuration file records downloading addresses of various types of three-party protocol packets. After the target protocol packet is determined based on the protocol type of the printer 202, the electronic device 201 queries the foregoing configuration file, obtains a downloading address of the target protocol packet, and then accesses a server corresponding to the foregoing address, and downloads the target protocol packet.

After the target protocol packet is obtained, the electronic device 201 may send the configuration information of the currently accessed local area network AP 100 to the printer 202 through the foregoing target protocol packet, and control the printer 202 to access the AP 100, to complete a network configuration task of the printer 202.

In an embodiment, the matching relationship between the product identifier of the printer and the protocol type may also be preset in the electronic device 201. In this case, after the product identifier of the printer 202 is obtained, the electronic device 201 may automatically determine the protocol type of the printer 202 through a preset matching relationship, and then determine the target protocol packet, without sending the product identifier of the printer 202 to the developer platform, and determining the protocol type of the printer 202 through the developer platform.

The electronic device 201 may determine, based on a user operation, a target file that the user intends to print.

After network configuration succeeds, the electronic device 201 may send the target file to the printer 202 through the target protocol packet or the preset Mopria protocol packet, and control the printer 202 to print the target file.

If the target protocol packet is the network configuration protocol packet (used only for configuring the network for the printer 202), the electronic device 201 needs to deliver the printing task and the target file to the printer 202 through the preset Mopria protocol packet, and control the printer 202 to print the target file. If a target protocol packet provided by the printer manufacturer is the printing protocol packet (which not only can be used for configuring the network for the printer, but also can be used for controlling the printer to execute the printing task), the electronic device 201 may continue to deliver the printing task and the target file to the printer 202 through the target protocol packet, and control the printer 202 to print the target file.

According to the method shown in FIG. 1A, the electronic device 201 may successively configure the network for printers provided by a plurality of different manufacturers, and specific applications provided by the manufacturers do not need to be separately downloaded. This not only saves the storage space of the electronic device 201, but also saves user operations, which is beneficial to improving printing experience of the user.

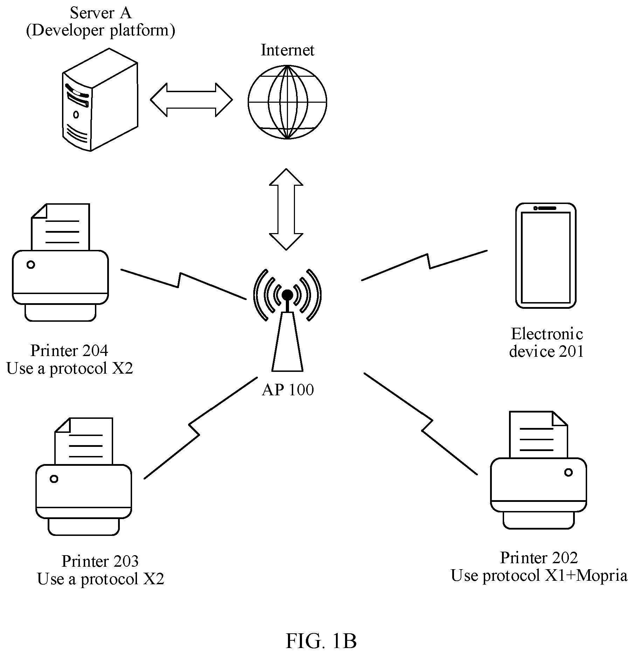

Referring to FIG. 1B, for example, the electronic device 201 may further configure a network for a printer 203 and a printer 204, and control the printer 203 and the printer 204 to access the local area network AP 100. Protocol types of any two printers may be the same or different.

For example, the printer 202 (a first printer) may use a protocol X1 (a third protocol), the printer 203 (a second printer) may use a protocol X2 (a second protocol), and a printer 204 (a third printer) may use the protocol X2 (a fifth protocol). Generally, printers of different manufacturers have different protocol types. Printers of a same manufacturer have a same protocol type. Certainly, printers of different models of the same manufacturer may also have different protocol types.

It is assumed that a three-party protocol packet X1 provided by a manufacturer A that matches a protocol X1 is the network configuration protocol packet (used only for network configuration), and a three-party protocol packet X2 provided by a manufacturer B that matches a protocol X2 is the printing protocol packet (used for network configuration and printing), after network configuration of the printer 202 succeeds, the printer 202 needs to control the printer 202 to execute the printing task through the preset Mopria protocol packet. After network configuration of the printer 203/printer 204 succeeds, the printer 203/printer 204 may continue to control the printer 202 to execute the printing task through the three-party protocol packet X2.

In a scenario shown in FIG. 1B, the electronic device 201 may determine, based on a user operation, a target printer that the user intends to use, for example, the printer 202, the printer 203, or the printer 204. Then, the electronic device 201 may determine a target protocol packet matching the target printer. When the target protocol packet is the Mopria protocol packet, the electronic device 201 sends, to the target printer through the preset Mopria protocol packet, the target file that is selected by the user and that the user intends to use, and controls the target printer to print the target file. When the target protocol packet is the three-party protocol packet, the electronic device 201 may first load the three-party protocol packet. After loading is completed, the electronic device 201 may send the target file to the target printer through the foregoing three-party protocol packet, and control the target printer to print the target file.

For example, when the user selects the printer 202 as the target printer that is about to execute the printing task, the electronic device 201 may determine that the target protocol packet is the Mopria protocol packet. Therefore, the electronic device 201 sends, to the printer 202 through the Mopria protocol packet, the target file that is selected by the user and that the user intends to print, and controls the printer 202 to print the target file. When the user selects the printer 203 as the target printer that is about to execute the printing task, the electronic device 201 may determine that the target protocol packet is the three-party protocol packet X2. Therefore, the electronic device 201 sends, to the printer 203 through the three-party protocol packet X2, the target file that is selected by the user and that the user intends to print, and controls the printer 203 to print the target file.

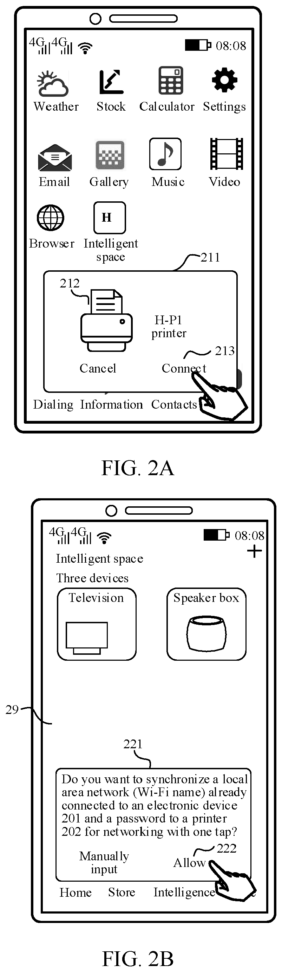

FIG. 2A to FIG. 2C are schematic diagrams of a set of user interfaces that configure a network for a printer 202 through an electronic device 201 according to an embodiment of this application.

Using the printer 202 as an example, after the printer 202 broadcasts the detection frame, the electronic device 201 may detect the detection frame of the printer 202. The electronic device 201 detects the detection frame of the printer 202, that is, the electronic device 201 discovers the printer 202.

The detection frame of the printer 202 carries the product identifier (PrdID) of the printer 202. The electronic device 201 may obtain the product identifier of the printer 202 through the detection frame of the printer 202. Further, the electronic device 201 may determine the protocol type of the printer 202, for example, a protocol X1. Referring to introduction of FIG. 1A, the electronic device 201 may query the developer platform to determine the protocol type of the printer 202, or the electronic device 201 may determine the protocol type of the printer 202 through a matching relationship preset by the electronic device 201. Details are not described herein again.

Then, the electronic device 201 may determine a target protocol packet matching the protocol type of the printer 202, for example, a target protocol packet X1. Referring to introduction of FIG. 1A, the electronic device 201 may download the target protocol packet from the developer platform or another server. In another embodiment, a plurality of three-party protocol packets may also be preset in the electronic device 201. The foregoing plurality of three-party protocol packets include the target protocol packet matching the protocol type of the printer 202. In this case, the electronic device 201 may obtain the target protocol packet from a local memory.

Referring to FIG. 2A, after the printer 202 is discovered, the electronic device 201 may display a card 211.

The card 211 displays the device information of the printer 202, for example, a device name "H-P1 printer" and a device icon 212. The foregoing device information may be obtained through the detection frame. In an implementation, the detection frame broadcast by the printer 202 directly carries the device information such as the device name or the device icon. The electronic device 201 may directly obtain the device information of the printer 202 from the foregoing detection frame. In another implementation, the electronic device 201 may determine the device information of the printer 202 through the product identifier of the printer 202. For example, the developer platform, the another server, or the electronic device 201 stores a matching relationship between the product identifier and the device information. The electronic device 201 may determine the device information of the printer 202 through a matching relationship preset by the developer platform, the another server, or the electronic device 201. Through the card 211, the user can quickly and intuitively perceive that the electronic device 201 discovers a new device, and can determine, based on the device information displayed in the card 211, whether the new device is a newly purchased printer 202 waiting to be configured with a network.

The card 211 further includes a control 213. When the user determines that the new device discovered by the electronic device 201 is the printer 202 waiting to be configured with a network, the user may tap the control 213. After detecting a user operation on the control 213, the electronic device 201 may display a user interface shown in FIG. 2B.

As shown in FIG. 2B, the electronic device 201 may display the card 221. Prompt information, for example, "Do you want to synchronize a local area network (Wi-Fi name) already connected to the electronic device 201 and a password to the printer 202 for networking with one tap?", is displayed in the card 221, and is used for querying the user whether to allow the electronic device 201 to send the configuration information (including the name and the password) of the currently connected local area network AP 100 to the printer 202.

The card 221 further includes a control 222. The user may grant, through the control 222, an authority of synchronizing the configuration information of the AP 100 to the printer 202 to the electronic device 201. After a user operation on the control 222 is detected, the electronic device 201 may read the configuration information such as the name and the password of the currently connected local area network AP 100 from system settings, and then send the foregoing configuration information to the printer 202 through the target protocol packet.

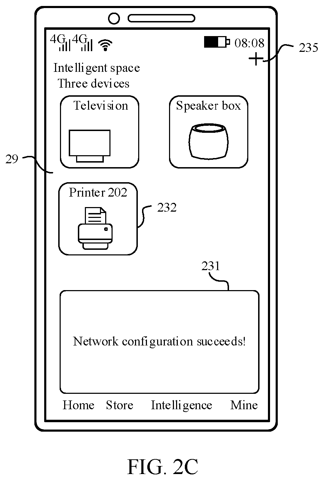

Referring to FIG. 2C, after the printer 202 successfully accesses the AP 100, the electronic device 201 may display a card 231, to prompt the user that network configuration of the printer 202 succeeds.

After the user operation on the control 213 in FIG. 2A is detected, the electronic device 201 may open an intelligent space application (intelligent space for short hereinafter, and also referred to as a first application). The intelligent space is used for managing other devices in the local area network, for example, devices such as a television and a speaker box in a home local area network. As shown in FIG. 2B, the electronic device 201 may further display a main interface 29 of the intelligent space. After the printer 202 successfully accesses the AP 100, referring to FIG. 2C, the intelligent space may display an icon 232 (a first icon) on the main interface 29. The icon 232 corresponds to the printer 202. In this case, the user may further determine, through the icon 232, that the printer 202 has successfully accessed the local area network AP 100.

By implementing a network configuration method shown in FIG. 2A to FIG. 2C, the mobile terminal (that is, the electronic device 201) such as a mobile phone or a tablet computer may automatically obtain a target protocol packet matching a printer through the product identifier, and deliver network configuration information to the printer through the target protocol packet, without requiring the user to additionally download the specific application provided by the printer manufacturer. This not only reduces user operations, provides convenience for the user to configure a network for the printer, but also helps to save the storage space of the electronic device 201.

In a network configuration process, the user also does not need to manually select the local area network and input a local area network password, thereby further saving user operations and providing convenience for the user to configure a network of the printer.

In some embodiments, the electronic device 201 may alternatively display a plurality of network names. One network name corresponds to one local area network scanned by the electronic device 201. The electronic device 201 may determine the target local area network based on an operation of the user on any one of the foregoing plurality of network names, and the user may manually enter a password of the local area network, and then the electronic device may determine the password of the target local area network based on an input operation of the user. Then, similarly, the electronic device 201 may send the configuration information such as the network name and the password of the foregoing target local area network to the printer 202 through the target protocol packet, and control the printer 202 to successfully access the target local area network.

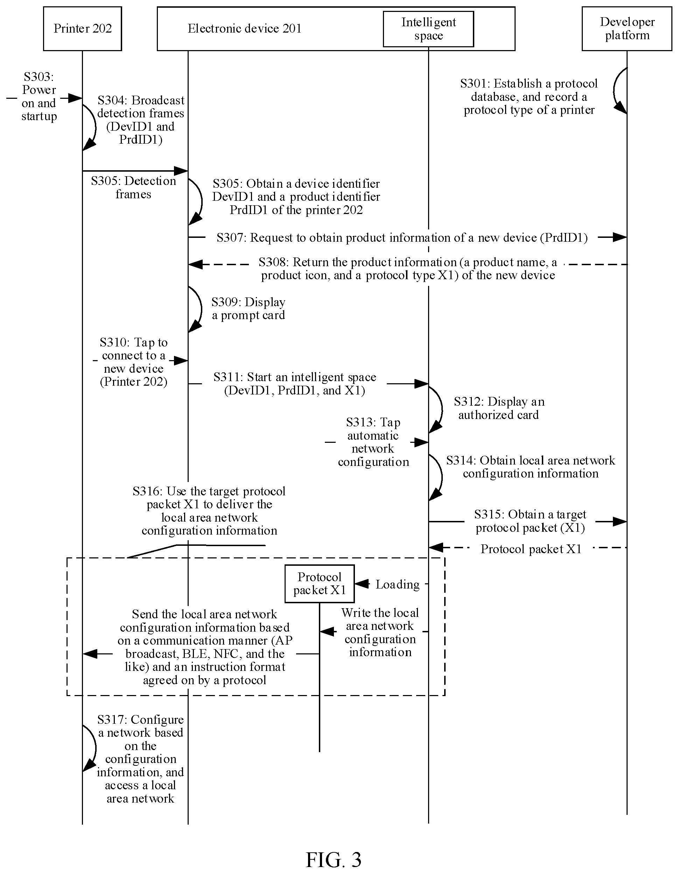

FIG. 3 is a flowchart of configuring a network for a printer 202 through an electronic device 201 according to an embodiment of this application.

**S301: Establish a protocol database, and record a protocol type of a printer.**

Table 1 is a data structure according to an embodiment of this application.

**Table 1**

| Product identifier | Product name | Product icon | Protocol type |
|---|---|---|---|
| PrdID1 | H-P1 | H-P1.img | X1 |
| PrdID5 | ABC-01 | ABC-01.img | X2 |
| ... | ... | ... | ... |

The developer platform may establish a printer protocol database shown in Table 1, and record related information such as a product identifier, a product name, a product icon, and a protocol type of a printer. The foregoing protocol database is also referred to as a protocol rack.

The product name usually indicates a provider and a model of the product. For example, "H" in "H-P1" may indicate a provider, and "P1" may indicate a model. Printers of one model provided by one printer manufacturer may share one product identifier. Further, generally, all models of printers provided by one printer manufacturer use a same printing protocol. Certainly, optionally, printers of different models provided by one printer manufacturer may alternatively use different printing protocols.

The developer platform may update the printer protocol database in real time. The foregoing update includes updating related information of an existing printer, and adding a new printer and related information of the new printer.

For example, when PrdID1 (an "H-P1" printer) uses a protocol Y1, the developer platform may update a protocol type of PrdID1 to the protocol Y1 in the printer protocol database shown in Table 1, which is as follows:

| | | | |
|---|---|---|---|
| PrdID1 | H-P1 | H-P1.img | Y1 |

For another example, after a manufacturer "ABC" newly launches a printer using a protocol X2, the developer platform may newly add a record to the printer protocol database shown in Table 1, which is as follows:

| | | | |
|---|---|---|---|
| PrdID8 | ABC-02 | ABC-02.img | X2 |

When the updated or added content relates to a new protocol type, the developer platform may further store a three-party protocol packet corresponding to the new protocol type.

**S303: The printer 202 is powered on.**

**S304: The printer 202 broadcasts detection frames (DevID1 and PrdID1).**

The detection frame is a segment of data in a specific format. The detection frame broadcast by the printer 202 may carry a device identifier (DevID) of the printer 202, used for uniquely identifying the printer 202, for example, DevID1. In this embodiment of this application, the detection frame may further carry a product identifier of the printer 202, used for indicating a manufacturer and a model of the printer 202, for example, PrdID1.

**S305: Obtain a device identifier DevID1 and a product identifier PrdID1 of the printer 202 through the detection frames.**

After the printer 202 broadcasts the detection frames, the electronic device 201 may obtain the detection frames of the printer 202 through scanning, and further, the electronic device 201 may obtain the device identifier DevID1 and the product identifier PrdID1 of the printer 202 through the foregoing detection frames. In this case, the printer 202 may be referred to as a device newly discovered by the electronic device 201, that is, a new device.

**S307: Request to obtain product information of a new device (PrdID1).**

The electronic device 201 may send a request for obtaining the product information to the developer platform. In this case, the request may carry the product identifier PrdID1 of the printer 202.

**S308: Return the product information (a product name, a product icon, and a protocol type X1) of the new device.**

In response to the foregoing request, the developer platform may search the protocol database shown in Table 1 for the product identifier PrdID1 carried in the foregoing request. After finding the foregoing product identifier, the developer platform may obtain the product information such as the product name, the product icon, and the protocol type corresponding to the foregoing product identifier. Then, the developer platform may send the foregoing information back to the electronic device 201. The electronic device 201 may determine a product name, a product icon, a protocol type, and the like of the new device (that is, the printer 202). For example, the protocol type of the printer 202 may be X1 (a first type), that is, the printer 202 uses the protocol X1.

In some embodiments, a protocol rack table may be set in the electronic device 201. Each time after determining a protocol type of a printer, the electronic device 201 may record a product identifier and the protocol type of the printer in the protocol rack table. In this way, after S305 is executed, the electronic device 201 may first check the protocol rack table. If a product identifier of the new device is recorded in the protocol rack table, the electronic device 201 may directly determine the product information of the new device based on the foregoing protocol rack table, and does not need to obtain the product information of the new device from the developer platform.

**S309: Display a prompt card.**

After obtaining the product information of the new device, the electronic device 201 may generate the prompt card shown as the card 211 in FIG. 2A, to display the product information such as the product name and the product icon of the new device to the user, for the user to confirm whether the new device discovered by the electronic device 201 is the printer 202 on which a network configuration operation is being performed.

**S310: Detect a user operation of connecting the new device (the printer 202).**

As shown in FIG. 2A, the card 211 further includes a control 213. The electronic device 201 may detect a user operation, for example, a tap operation, on the control 213 through devices such as a display screen and a touch sensor. The foregoing operation is the user operation of connecting the new device.

**S311: Start an intelligent space (DevID1, PrdID1, and X1).**

In response to the user operation of connecting the new device, the electronic device 201 may send indication information to the intelligent space, to trigger the intelligent space to be started. The foregoing indication information may include information such as the device identifier DevID1, the product identifier PrdID1, and the protocol type X1 of the new device. After the intelligent space is started, the intelligent space may start to obtain local area network configuration information (S312 to S314), and download the target protocol packet (S315 to S316).

**S312: Display an authorized card.**

As shown in FIG. 2B, after the intelligent space is started, the intelligent space may control the display of the card 221. The card 221 is also referred to as the authorized card. The card 221 displays prompt information for querying the user whether to allow the electronic device 201 to synchronize the configuration information of the currently connected AP 100 to the printer 202.

**S313: Detect a user operation of confirming automatic network configuration.**

As shown in FIG. 2B, the card 221 further includes a control 222. Similarly, the electronic device 201 may detect a user operation on the control 222 in the card 221 through devices such as a display screen and a touch sensor. The foregoing operation is the user operation of confirming automatic network configuration. The intelligent space may perceive the foregoing user operation based on an event notification of the electronic device 201. In response to the foregoing operation, the intelligent space may confirm that an authority of automatic network configuration is obtained, that is, an authority that the user allows to obtain the local area network configuration information by the intelligent space and sends the local area network configuration information to the new device for network configuration.

**S314: Obtain local area network configuration information.**

In an implementation, the intelligent space may be set to an application trusted by a system. In this case, the intelligent space may directly send a request for obtaining the local area network configuration information to a system setting module, and obtain the configuration information of the currently connected local area network from the system setting module.

In another implementation, the intelligent space may be set to an application that is not trusted by a system. In this case, the intelligent space cannot directly obtain the local area network configuration information from the system setting module. Therefore, the intelligent space may obtain the local area network configuration information from the system setting module through an application trusted by another system.

Using the network 10 shown in FIG. 1A as an example, a local area network currently connected to the electronic device 201 is the AP 100. In this case, the intelligent space can obtain the configuration information of the AP 100.

**S315: Obtain a target protocol packet (X1).**

The intelligent space may determine, based on the protocol type of the new device, a target protocol packet matching the protocol type of the new device. For example, when the new device uses the protocol X1, the intelligent space may determine the target protocol packet X1 matching the protocol X1.

The intelligent space stores the protocol packet configuration file. The protocol packet configuration file records downloading addresses of various three-party protocol packets. After determining the target protocol packet X1, the intelligent space may query the protocol packet configuration file, determine a downloading address of the target protocol packet X1, and then download the target protocol packet X1 from a corresponding server.

Preferably, each time after a three-party protocol packet is obtained, the electronic device 201 may record a local storage address of the three-party protocol packet in the protocol rack table. After determining the target protocol packet X1, the electronic device 201 may determine, through the protocol rack table, whether the target protocol packet X1 is stored in the local memory. If the local memory stores the target protocol packet X1, the electronic device 201 may directly obtain the target protocol packet X1 from the local memory without downloading the target protocol packet X1.

**S316: Use the target protocol packet X1 to deliver the local area network configuration information.**

After the target protocol packet (for example, the target protocol packet X1) is obtained, the intelligent space may load the target protocol packet. Loading refers to writing program code stored in a local memory into an internal memory. After loading the target protocol packet, the intelligent space may write the obtained local area network configuration information into the target protocol packet. Then, subsequently, the target protocol packet may send the local area network configuration information to a to-be-configured printer 202 in a communication manner and an instruction format agreed on by a protocol of the target protocol packet. The foregoing communication manner includes, but is not limited to, AP broadcast, bluetooth low energy (bluetooth low energy, BLE) transmission, and near field communication (near field communication, NFC) transmission.

**S317: Configure a network based on the configuration information, and access a local area network.**

After the electronic device 201 executes the operation shown in S316, the printer 202 may receive the local area network configuration information sent by the electronic device 201, for example, the configuration information of the AP 100 shown in FIG. 1A, and then access the AP 100, to complete a network configuration task.

After network configuration succeeds, the printer 202 may send a network configuration success notification back to the intelligent space through the target protocol packet. Referring to FIG. 2C, after the foregoing notification is received, the intelligent space may display a network configuration success card, to prompt the user that network configuration of the printer 202 succeeds.

After network configuration succeeds, the electronic device 201 may deliver a printing task to the printer 202, and may execute the printing task in the printer 202, to satisfy printing requirements of the user.

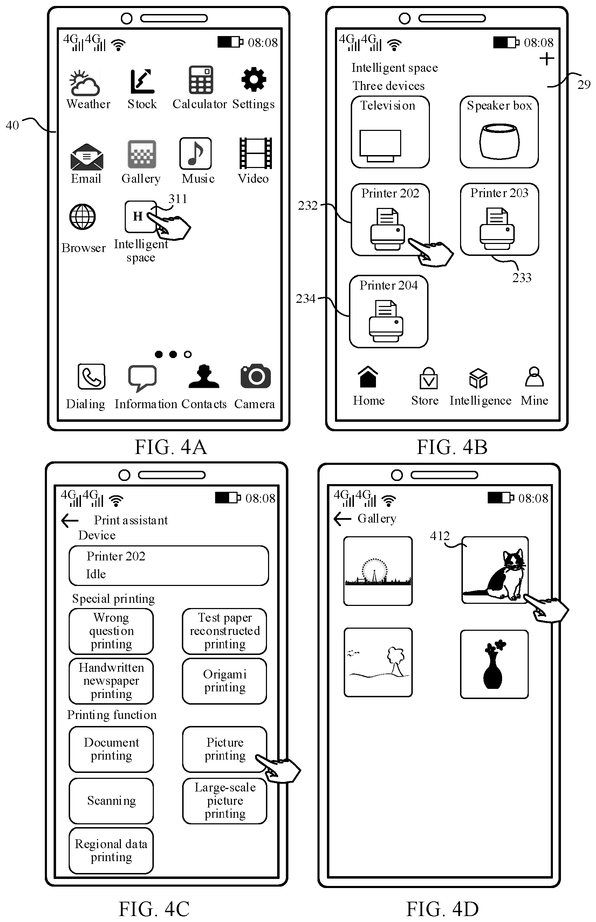

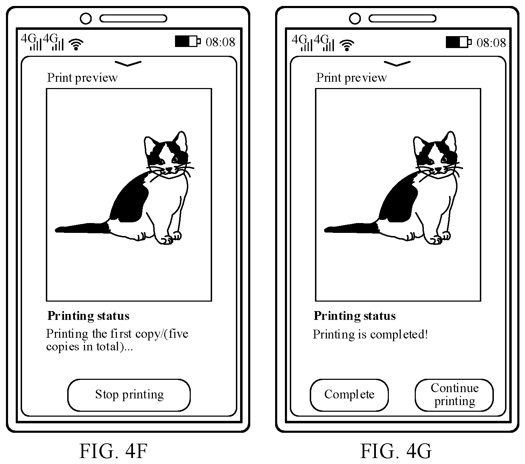

FIG. 4A to FIG. 4G show a set of user interfaces that control printers to execute printing tasks through an electronic device 201 according to an embodiment of this application.

FIG. 4A is a desktop 40 of an electronic device 201 according to an embodiment of this application. As shown in FIG. 4A, a plurality of application icons such as a weather application icon, an email application icon, and a browser application icon may be displayed on the desktop 40 of the electronic device 201. In this embodiment of this application, the electronic device 201 is also installed with the intelligent space. In this case, the desktop 40 shown in FIG. 4A further includes an intelligent space application icon 311 (icon 311 for short).

The electronic device 201 may detect a user operation, for example, a tap operation, acting on the icon 311, and in response to the foregoing operation, the electronic device 201 may display a main interface 29 of an intelligent space shown in FIG. 4B. The main interface 29 of the intelligent space shown in FIG. 4B may be referred to as a first interface. The intelligent space may display one or more icons on the main interface 29, for example, an icon 232, an icon 233 (a second icon), and an icon 234 (a third icon). The icon 233 corresponds to the printer 203 in the local area network AP 100. The icon 234 corresponds to the printer 204 in the local area network AP 100. It may be understood that the local area network AP 100 may further include more electronic devices. Correspondingly, the main interface 29 may further display icons matching the foregoing more electronic devices one by one.

In an embodiment, the electronic device 201 may discover the printer 203 and the printer 204 based on the method shown in FIG. 2A to FIG. 2C, and then connect to the printer 203 and the printer 204.

In another embodiment, the printer 203 and the printer 204 may also be added to the intelligent space of the electronic device 201. For example, the electronic device 201 may detect a user operation on the control 235 in FIG. 2C, and in response to the foregoing operation, the electronic device 201 may scan a device in a nearby environment. Using the printer 203 as an example, referring to introduction of S303 to S305 in FIG. 3, the electronic device 201 may discover the printer 203. Then, the electronic device 201 may obtain a protocol packet matching a protocol type of the printer 203 and configuration information of a local area network in which the electronic device 201 is currently located, send the configuration information of the local area network in which the electronic device 201 is currently located to the printer 203 through the foregoing matched protocol packet, and control the printer 203 to access the local area network in which the electronic device 201 is located. After the printer 203 is connected to the local area network in which the electronic device 201 is located, as shown in FIG. 4B, the electronic device 201 may display the icon 233 corresponding to the printer 203. Similarly, when configuration information of the local area network in which the electronic device 201 is currently located is obtained, the electronic device 201 may directly read the configuration information of the local area network from the system settings based on an authorization operation of the user, or may determine the local area network configuration information based on a manual input.

For example, as shown in FIG. 4B, the electronic device 201 may detect a user operation acting on the icon 232. In response to the foregoing operation, the electronic device 201 may display the user interface shown in FIG. 4C. A plurality of controls may be displayed on the interface. One control corresponds to one type of printing function, such as document printing and picture printing.

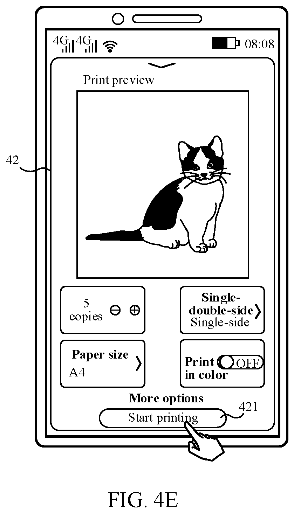

As shown in FIG. 4C, the electronic device 201 may detect a user operation acting on a picture printing control. In response to the foregoing operation, the electronic device 201 may display a locally saved picture. As shown in FIG. 4D, the user may tap a picture that the user intends to print, for example, a picture 412. In response to the foregoing operation, the electronic device 201 may display a printing parameter setting interface 42. An interface shown in FIG. 4E may be referred to as the printing parameter setting interface 42. The user may set printing parameters such as a quantity of prints, single/double pages, a paper size, and a color in the foregoing interface.

After the setting is completed, the electronic device 201 may detect a user operation acting on a start printing control 421. In response to the foregoing operation, the electronic device 201 may send the picture 412 and the printing parameters set by the user to the printer 202 corresponding to the icon 232. Subsequently, the printer 202 may print the picture 412 based on the foregoing printing parameters. Referring to FIG. 4F to FIG. 4G, in a printing process, the printer 202 may return the printing progress to the electronic device 201, for real-time perception by the user.

In a scenario in which the target protocol packet X1 corresponding to the printer 202 is the network configuration protocol packet (used only for network configuration), after the user operation of selecting the printer 202 to execute the printing task as described in FIG. 4B to FIG. 4E is detected, the electronic device 201 may send the picture 412 and the printing parameters set by the user to the printer 202 through the preset Mopria protocol packet.

On the user interface shown in FIG. 4B, the electronic device 201 may also detect a user operation acting on the icon 233. In response to the foregoing operation, the electronic device 201 may determine that the printer 203 is the target printer. In a scenario in which the target protocol packet X2 corresponding to the printer 203 is the printing protocol packet (used for network configuration and printing), the electronic device 201 may load the target protocol packet X2, and send, to the printer 203 through the target protocol packet X2, a target file (for example, the picture 412) that is selected by the user and that intends to be printed and printing parameters (printing parameters shown in FIG. 4E) set by the user.

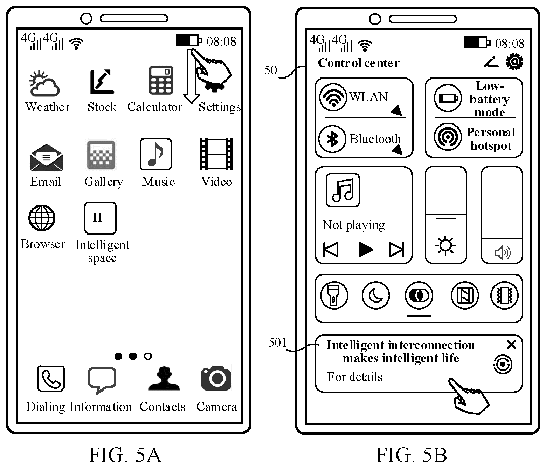

FIG. 5A to FIG. 5J show another set of user interfaces that control printers to execute printing tasks through an electronic device 201 according to an embodiment of this application.

As shown in FIG. 5A, the electronic device 201 may detect a slide-down operation acting on a screen. In response to the foregoing operation, the electronic device 201 may display a control center interface 50 shown in FIG. 5B. As shown in FIG. 5B, the control center interface 50 may include one or more function controls (for example, a wireless local area network (WLAN) switch control, a Bluetooth switch control, a low-battery mode switch control, a brightness adjustment control, and a sound adjustment control) and an intelligent interconnection control card 501.

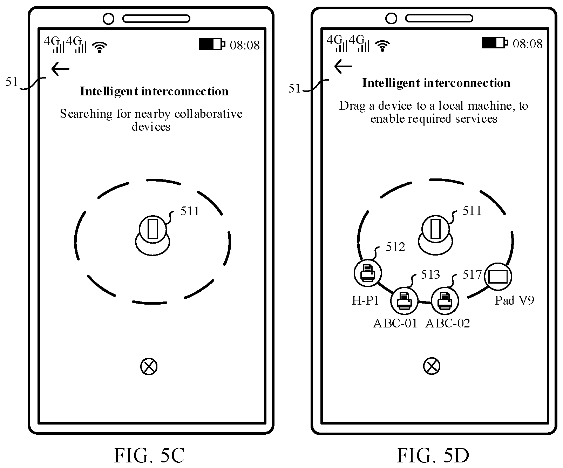

The electronic device 201 may receive an operation (for example, single-tap) performed by the user on the intelligent interconnection control card 501, and in response to the operation, the electronic device 201 may display an intelligent interconnection interface 51 shown in FIG. 5C.

As shown in FIG. 5C, the intelligent interconnection interface 51 may include a device icon 511 of the electronic device 201.

In a process of displaying the intelligent interconnection interface 51 shown in FIG. 5C, the electronic device 201 may search for a nearby connected device. As shown in FIG. 5D, after configuring a network for the printer 202 and controlling the printer 202 to access the local area network AP 100, the electronic device 201 may display a device icon 512 (a first icon) of the printer 202 on the intelligent interconnection interface 51. Similarly, after configuring a network for the printer 203 and the printer 204, and controlling the printer 203 and the printer 204 to access the local area network AP 100, the electronic device 201 may display a device icon 513 (a second icon) of the printer 203 and a device icon 517 (a third icon) of the printer 204 on the intelligent interconnection interface 51. The intelligent interconnection interface 51 shown in FIG. 5D may be referred to as a first interface.

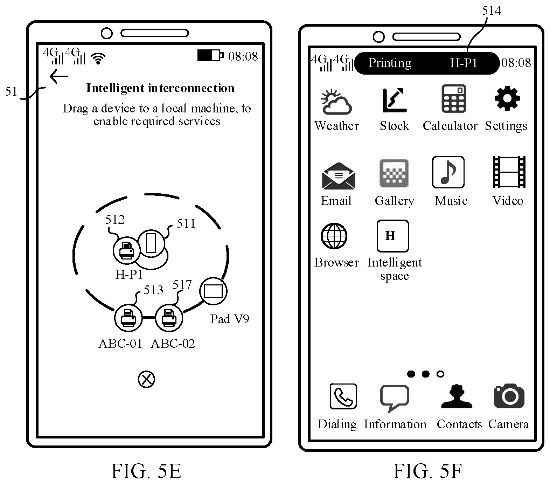

As shown in FIG. 5D and FIG. 5E, the electronic device 201 may detect a drag operation of the user dragging the device icon 512 to a region in which the device icon 511 is located. In response to the drag operation, as shown in FIG. 5F, the electronic device 201 may display a floating control 514 (a first floating control), and meanwhile, the electronic device 201 may display the desktop 50. The floating control 514 corresponds to the printer 202. Subsequently, based on operations of switching a desktop and opening an application of the user, the floating control 514 is floated and displayed on an upper layer of another interface. A display position of the floating control 514 remains unchanged.

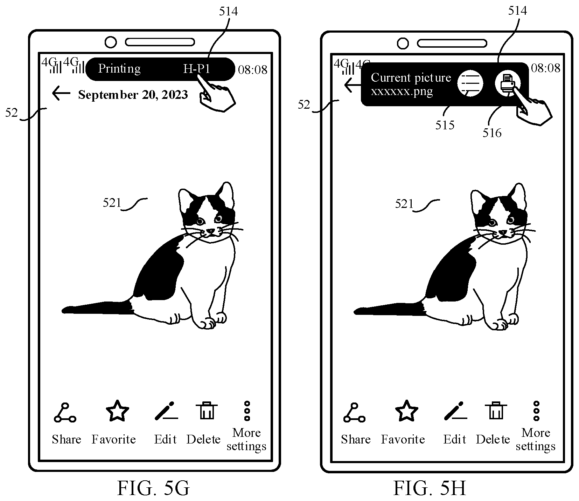

As shown in FIG. 5G, when a picture browsing interface 52 (a second interface) is displayed, the electronic device 201 may display the floating control 514 on an upper layer of the picture browsing interface 52. A user operation that controls the picture browsing interface 52 to be displayed may be referred to as a second operation. The picture browsing interface 52 may include a picture 521 (a first file). When the picture browsing interface 52 and the floating control 514 are displayed, the electronic device 201 may detect an operation (for example, single-tap, which is also referred to as a third operation) performed by the user on the floating control 514. Referring to FIG. 5H, in response to the operation, the electronic device 201 may expand the floating control 514.

The expanded floating control 514 may include a control 515 and a control 516. After a user operation on the control 515 is detected, the electronic device 201 may display the printing parameter setting interface 42 shown in 4E. The electronic device 201 may receive the printing parameters set by the user through the foregoing printing parameter setting interface 42. After a user operation (a first operation) on the control 516 is detected, the electronic device 201 may send the currently displayed picture 521 and the printing parameters (for example, 5 copies of prints, single-sided printing, a paper size of A4, and black and white printing) set by the user to the printer 202, and control the printer 202 to print the picture 521 at a target printing parameter. If the user does not set the printing parameters, the electronic device 201 may send the currently displayed picture 521 and default printing parameters to the printer 202.

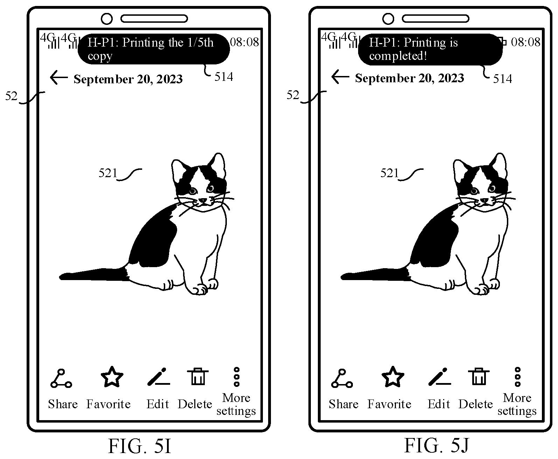

In a process in which the printer 202 prints the picture 521 through the target printing parameter, the printer 202 may send a printing status to the electronic device 201. As shown in FIG. 5I and FIG. 5J, after receiving the printing status, the electronic device 201 may display prompt information in the floating control 514, for example, the prompt information such as "Printing the 1/5th copy" or "Printing is completed!", to prompt the user of a printing process.

After the floating control 514 is displayed based on the drag operation shown in FIG. 5D and FIG. 5E, the electronic device 201 may open a timer. Preferably, the timer counts for 10 seconds. After timing of the foregoing timer ends, the electronic device 201 may close the floating control 514. Later, if the user needs to use the printer again, the user may open again a floating control corresponding to the printer based on the operations shown in FIG. 5A to FIG. 5D, and control the printer to print the target file through the control.

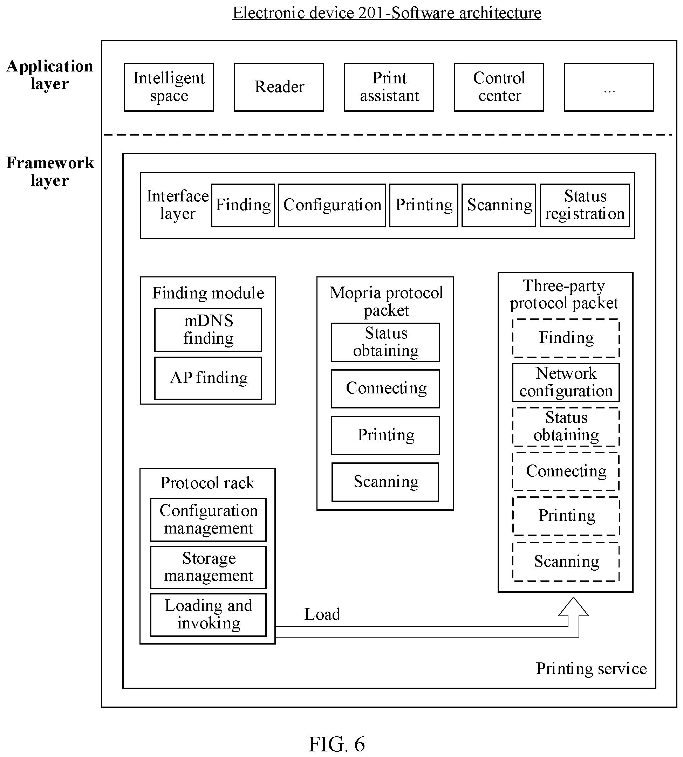

FIG. 6 a schematic diagram of a software architecture of an electronic device 201 according to an embodiment of this application.

A software system of the electronic device 201 may use a layered architecture. In this embodiment of this application, an Android system with a layered architecture is used as an example to illustrate a software structure of the electronic device 201.

In the layered architecture, software is divided into several layers. In the layered architecture, software is divided into several layers. In some embodiments, the Android system includes four layers that are respectively an application layer (that is, an application layer), an application framework layer (that is, a framework layer), an Android runtime (Android runtime) and system library, and a kernel layer from top to bottom. FIG. 6 only shows the application layer and the framework layer.

The application layer includes some application packages, for example, an intelligent space, a reader, a print assistant, and intelligent interconnection. The foregoing application can invoke a printing service of the framework layer, to discover and control the printer to execute a printing operation. Any one of the foregoing applications may be referred to as a first application.

As shown in FIG. 6, the printing service includes an interface layer. The interface layer includes a discovery interface, a configuration interface, a printing interface, a scanning interface, and a status registration interface. The discovery interface may be configured to provide a device for discovering services (a discovery service) to an upper-layer application; the configuration interface may be configured to provide a service (a configuration service) for modifying configuration information to the upper-layer application; the printing interface may be configured to provide a service (a file printing service) for controlling a printer to print a file to the upper-layer application; the scanning interface may be configured to provide a service (a scanning service) for controlling a printer to scan a file to the upper-layer application; and the status registration interface is configured for providing a service (a status callback service) for returning a progress of a printing task to the upper-layer application. Herein, the configuration information in the configuration service specifically refers to configuration information of a protocol rack, which is described in detail in subsequent embodiments and is not expanded herein.

The upper-layer application may invoke a discovery module through the discovery interface, to discover a printer in the environment.

Specifically, the discovery module includes submodules such as multicast DNS (Multicast DNS, mDNS) discovery and AP discovery. The mDNS discovery may obtain another electronic device in the local area network from the AP 100 based on an mDNS technology, to further discover another electronic device. The AP discovery may directly discover another electronic device in a near field environment based on a Wi-Fi broadcast technology. After it is detected that the upper-layer application invokes the discovery interface, the discovery module may sequentially execute the mDNS discovery and the AP discovery, to discover the printer in the environment.

Referring to FIG. 4A and FIG. 4B, when the intelligent space is opened, the intelligent space may invoke the discovery interface to query a printer in the local area network or near field environment. After one or more printers are discovered, the intelligent space may display device icons of the foregoing one or more printers, for example, the icon 232, the icon 233, and the icon 234, for the user to select.

Referring to FIG. 5C and FIG. 5D, when the intelligent interconnection is entered, the intelligent interconnection may invoke the discovery interface to query a printer in the local area network or near field environment. Similarly, after one or more printers are discovered, the intelligent space may display device icons of the foregoing one or more printers, for example, the device icon 512, for the user to select.

Then, the upper-layer application may determine, based on the user operation, a target printer that the user intends to use. For example, as shown in FIG. 4B, the intelligent space may detect a user operation acting on the icon 232, and determine a target printer 202 based on the foregoing operation. For another example, as shown in FIG. 5C and FIG. 5D, a user operation of dragging the device icon 512 to the device icon 511 may be detected in the intelligent interconnection, and the target printer 202 is determined based on the foregoing operation.

The upper-layer application may further determine, based on the user operation, a target file that the user intends to send to the target printer for printing and printing parameters, and then create the printing task. For example, the intelligent space may determine the target file and the printing parameters by referring to the user operations shown in FIG. 4C to FIG. 4E, to create the printing task. For another example, the intelligent interconnection may determine the target file and the printing parameters through user operations shown in FIG. 5F and FIG. 5G, to create the printing task.

After the printing task is created, the upper-layer application may deliver the printing task to the printing service through the printing interface. The printing service may determine the target printer based on the device identifier carried in the printing task. Then, the printing service may determine the target protocol packet matching the target printer.

The printing service includes the protocol rack. The protocol rack may determine, based on the device identifier carried in the printing task of the target printer, the target printer and the target protocol packet matching the target printer.

The protocol rack further includes a configuration management module, a storage management module, and a loading and invoking module. The configuration management module includes the protocol packet configuration file. The upper-layer application may update the protocol packet configuration file at any time through the configuration interface. The storage management module may be configured to manage the three-party protocol packet stored in the local memory. The loading and invoking module may obtain a storage address of the target protocol packet from the storage management module, to read and load the target protocol packet.

After the target protocol packet is determined, the protocol rack may first determine that the target protocol packet is the network configuration protocol packet or the printing protocol packet. If the target protocol packet is the network configuration protocol packet (used only for configuring the network for the printer 202), the protocol rack may confirm to use the preset Mopria protocol packet to deliver the printing task to the target printer. The electronic device 201 needs to control the printer 202 to print the target file through the printer 202 and the target file. If the target protocol packet is the printing protocol packet (which not only can be used for configuring the network for the printer, but also can be used for controlling the printer to execute the printing task), the electronic device 201 may load the target protocol packet, and use the target protocol packet to deliver the printing task to the target printer.

The protocol rack may obtain the storage address of the target protocol packet through the storage management module. Then, the loading and invoking module may read and load the target protocol packet based on the foregoing address.

In some scenarios, the target protocol packet downloaded in the network configuration process may also be deleted due to some operations, for example, an internal memory cleaning operation. In this case, the storage management module may return local non-storage to the protocol rack. In this case, the protocol rack may obtain the download address of the target protocol packet from the configuration management module, download the target protocol packet, and then load the target protocol packet.

As shown in FIG. 6, the Mopria protocol packet may include a status obtaining module, a connection module, a printing module, and a scanning module. The connection module may be configured to establish a communication connection; the printing module may be configured to control a printer to execute a printing task, the scanning module is configured to control a printer to execute a scanning task (for example, scanning a test paper or scanning an identity card); and the status obtaining module is configured to obtain a printing progress of a printer.

The three-party protocol packet may include a network configuration module, a status obtaining module, a connection module, a printing module, a scanning module, and a discovery module. The network configuration module is configured to control a printer to configure a network. For the status obtaining module, the connection module, the printing module, and the scanning module, refer to introduction of the foregoing Mopria protocol packet, and details are not described herein again. It may be understood that, communication methods and instruction formats of the status obtaining module, the connection module, the printing module, and the scanning module may be different in different protocol packets. The discovery module may provide a discovery method other than the mDNS discovery and the AP discovery. After one or more three-party protocol packets including the discovery module is obtained, the printing service may further sequentially execute a discovery method in the three-party protocol packets, to discover a device nearby, for the user to connect and use.

The status obtaining module, the connection module, the printing module, the scanning module, and the discovery module are optional. When the three-party protocol packet includes the status obtaining module, the connection module, the printing module, and the scanning module, the three-party protocol packet is the printing protocol packet, which can be configured not only for configuring a network, but also for controlling the printer to execute the printing task. When the three-party protocol packet does not include the status obtaining module, the connection module, the printing module, and the scanning module, the three-party protocol packet is the network configuration protocol packet, and is used only for configuring a network. After network configuration succeeds, the protocol rack may control a corresponding printer to execute the printing task through the preset Mopria protocol packet.

It may be understood that, when the protocol rack does not download any three-party protocol packet, the printing service does not include the three-party protocol packet.

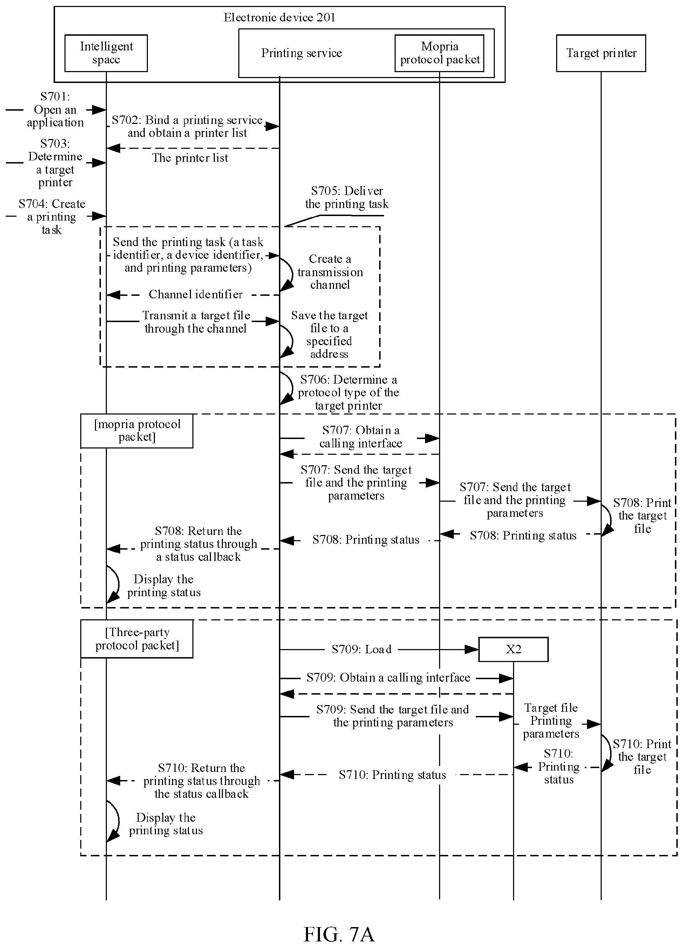

FIG. 7A is a flowchart of an electronic device 201 that controls a target printer to execute printing tasks according to an embodiment of this application.

S701: Open an application.

A target application includes an application that supports a printing function and that is installed on the electronic device 201, for example, an intelligent space, a reader, a print assistant, and intelligent interconnection.

Using the intelligent space as an example, referring to FIG. 4A, the electronic device 201 may detect a user operation that the user taps an intelligent space application icon 311. In response to the foregoing operation, the electronic device 201 may open the intelligent space and display a main interface 29 of the intelligent space. Using the intelligent interconnection as an example, the electronic device 201 may detect a user operation that the user taps an intelligent interconnection control card 501, and in response to the foregoing operation, the electronic device 201 may open the intelligent interconnection and an intelligent interconnection interface 51. The subsequent embodiments are described by using the intelligent space as an example, refer to the intelligent space for another target application, and details are not described again.

S702: Bind a printing service and obtain a printer list.

In a process of opening the intelligent space, the intelligent space may send registration information to the printing service, and bind the printing service. One application corresponds to one binding relationship. In a process of binding the printing service, the intelligent space may set a status callback through the status registration interface, to receive status information returned by the printing service at any time.

The printing service is provided with the printer list. The printer list stores related information of a current online printer device, for example, a device identifier, a product identifier, and an access address of the printer. After each discovery operation is executed by the discovery module (the discovery module of the printing service and/or the discovery module in the three-party protocol packet), the printing service may update the foregoing printer list. After it is detected that the intelligent space is bound to the printing service, the printing service may return the printer list to the intelligent space.

S703: Determine a target printer.

The intelligent space may determine the current online printer device based on the printer list, and then display corresponding icons such as the icon 232, the icon 233, and the icon 234 shown in FIG. 4B. The user may select a printer to execute the printing task through a touch operation acting on any icon. The intelligent space may determine the target printer through the foregoing user operation.

For example, after the user operation acting on the icon 232 is detected, the intelligent space may determine that the printer 202 corresponding to the icon 232 is the target printer. After the user operation acting on the icon 233 is detected, the intelligent space may determine that the printer 203 corresponding to the icon 233 is the target printer.

S704: Create a printing task.

As shown in FIG. 4C to FIG. 4E, the intelligent space may determine the target file and the printing parameters based on the user operation, and create the printing task through the user operation acting on the start printing control 421. The target file may be a document in a format such as .dox, .pdf, or .pptx, or may be a picture in a format such as .jpg or .png.

S705: Deliver the printing task.

After the printing task is created, the intelligent space may deliver the printing task to the printing service.

Specifically, the intelligent space may deliver the printing task to the printing service through the printing interface. The intelligent space may send information such as a task identifier, the device identifier, and the printing parameters to the printing service (a first request). After the foregoing information is received, the printing service may first create a data transmission channel, and send a channel identifier of the foregoing data transmission channel to the intelligent space. The intelligent space may determine a target channel (a first channel) based on the foregoing channel identifier, and then send the target file to the printing service through the target channel corresponding to the channel identifier. The printing service saves the received target file to a specified address.

The intelligent space may create a printer scanning task based on the user operation. It may be understood that, after the scanning task is created, the intelligent space does not need to send the target file to the printing service. After the target printer completes scanning, the target printer may return a scanning result to the printing service, and then return the scanning result to the intelligent space for the user to browse and use.

S706: Determine a protocol type of the target printer.

The printing service may determine, based on the device identifier, the target printer and the target protocol packet matching the target printer.

For example, after the user operation acting on the icon 232 is detected, the intelligent space may send the device identifier (DevID) of the printer 202 to the printing service. The printing service may determine, based on the device identifier of the printer 202, that the printer 202 is the target printer, and then determine the target protocol packet X1 matching the target printer 202. Then, the printing service may determine that the target protocol packet X1 is the network configuration protocol packet, and is used only for configuring a network. Therefore, the printing service may determine to use the Mopria protocol packet to deliver the printing task to the target printer 202, and control the printer 202 to execute the printing operation. Then, step S707 is executed.

After the user operation acting on the icon 233 is detected, the intelligent space may determine that the printer 203 corresponding to the icon 233 is the target printer. In this case, the printing service may determine the target protocol packet X2 matching the target printer 203, confirm that the target protocol packet X2 is the printing protocol packet, and may use the target protocol packet X2 to deliver the printing task to the target printer 203. Then, step S709 is executed.

S707: The printing service delivers the printing task to the target printer through a Mopria protocol packet.

After it is confirmed that the three-party protocol packet matching the target printer cannot be used for controlling the printer to execute the printing task (that is, the three-party protocol packet is the network configuration protocol packet, and is used only for network configuration), the printing protocol may determine to use the Mopria protocol packet to deliver the printing task to the target printer (for example, the printer 202). For example, after it is confirmed that the three-party protocol packet X1 matching the target printer 202 is used only for configuring a network for the printer 202, the protocol rack may use the Mopria protocol packet to deliver the printing task to the target printer.

Therefore, the printing service may obtain a printer calling interface from the Mopria protocol packet. Then, the printing service may send the target file and the printing parameters to the Mopria protocol packet through the foregoing interface. Then, the Mopria protocol packet may send the target file and the printing parameters to the target printer through the printing module preset in the protocol packet.

S708: Print a target file.

The target printer (for example, the printer 202) may print the target file based on the printing parameters.

Before the printing module in the Mopria protocol packet sends the target file and the printing parameters to the target printer, the Mopria protocol packet may set a callback interface through the status obtaining module preset in the protocol packet. In a process in which the target printer prints the target file, the printer may return the printing progress to the printing service through the foregoing interface, and then send the foregoing printing progress back to the intelligent space through a status callback between the printing service and the intelligent space. The intelligent space may display the printing progress for the user to view at any time.

S709: The printing service loads a three-party protocol packet matching the target printer, and delivers the printing task to the target printer through the three-party protocol packet.

After it is confirmed that the three-party protocol packet matching the target printer may be configured for controlling the printer to execute the printing task (that is, the three-party protocol packet is the printing protocol packet, which can be configured not only for network configuration, but also for printing), the printing service may load the three-party protocol packet. For example, after it is confirmed that the three-party protocol packet X2 matching the target printer 203 can be configured for controlling the printer to execute the printing task, the protocol rack may load the three-party protocol packet X2.

The printing service may obtain the printing interface from the three-party protocol packet. Then, the printing service may send the target file and the printing parameters to the three-party protocol packet through the foregoing interface. The three-party protocol packet may send the target file and the printing parameters to the target printer through the printing module preset in the protocol packet.

S710: Print the target file. For the target printer (for example, the printer 203), S710 may refer to S708, and details are not described herein again.

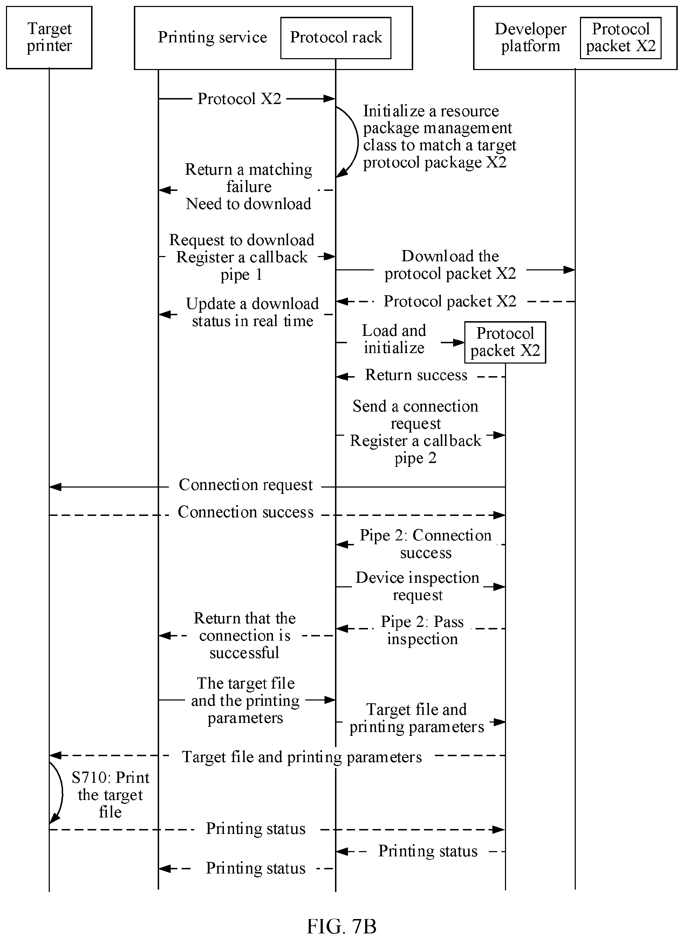

FIG. 7B is a flowchart of specific loading of a three-party protocol packet according to an embodiment of this application.

Referring to step S706, after the device identifier is received, the printing service may first determine the target printer based on the foregoing device identifier. Then, the printing service may determine the protocol type of the target printer, for example, the protocol X1 or the protocol X2.

Using the X2 as an example, after it is determined that the protocol type of the target printer is X2, the printing service may send the target protocol to a protocol rack module. After the target protocol is received, the protocol rack may initialize a resource package management class, and match a protocol packet of the protocol X2 through the resource package management class, that is, the target protocol packet X2. The protocol rack may query the storage management module, to confirm whether the target protocol packet X2 is stored in the local memory.

In a scenario in which the local memory stores the target protocol packet X2, the protocol rack may read the target protocol packet X2 based on an address provided by the storage management module, and write the target protocol packet X2 into the internal memory for performing initialization. A process of writing the protocol packet stored in the local memory into the internal memory is loading.

Reversely, if the local memory does not store the target protocol packet X2, the protocol rack may return a matching failure to the printing service, and instruct the printing service to download the target protocol packet X2. In response to the foregoing instruction, the printing service may send a request for downloading the target protocol packet X2 to the protocol rack, and register a callback pipe1. In response to the foregoing request, the protocol rack may query the configuration management module, to obtain a download address of the target protocol packet X2, for example, the developer platform, and then the protocol rack may download the target protocol packet X2 from the developer platform. In a process of downloading the target protocol packet X2, the protocol rack may return a downloading progress through the callback pipe 1 registered by the printing service. After the download is completed, the protocol rack may immediately load the target protocol package X2 (a protocol package X2 for short hereinafter), and perform initialization.

After the load is completed, the protocol packet X2 may return a success notification to the protocol rack. Then, referring to S709, the printing service may obtain various calling interfaces of the protocol packet X2, such as a status obtaining interface, a connection interface, a printing interface, and a scanning interface.

First, the printing service may send a connection request to the protocol packet X2 through the connection interface, and register a callback pipe 2. The protocol packet X2 immediately matches a connection request function under the protocol X2, and sends the connection request to the target printer (for example, the printer 203) through the connection request function under the protocol X2. In response to the foregoing connection request, the electronic device 201 may establish a communication connection with the target printer based on the protocol packet X2. After a connection success notification returned by the target printer is received, the protocol packet X2 may return the foregoing notification back to the protocol rack. Based on security requirements, the protocol rack may first send a device inspection request to the protocol packet X2. When a connection is established, the protocol packet X2 may obtain a device identifier of a peer device. The protocol packet X2 may detect that the device identifier of the peer device is consistent with the device identifier obtained by the previous printing service, that is, inspect whether a connected device is the target printer. When the device identifier of the peer device is consistent with the device identifier obtained by the previous printing service, the protocol packet X2 may confirm that the device is correctly connected. The protocol packet X2 may return, to the protocol rack through the previously registered callback pipe 2, a notification indicating that the inspection succeeds. The protocol rack may transparently transmit the foregoing notification to the printing service.

Then, referring to S709, the printing service may obtain a printing interface of the protocol packet X2, and the printing service may send the target file and the printing parameters to the three-party protocol packet X2 through the printing interface. After being translated by the protocol packet X2, the target printer may receive and identify the target file and the printing parameters, and then print the target file based on the printing parameters.

The protocol packet X2 may register a callback pipe 3 through the status obtaining interface. In a process in which the target printer prints the target file, the target printer may return the printing progress to the protocol packet X2 through the pipe 3. Based on a callback between the printing service and the intelligent space, the intelligent space may obtain the printing progress, and then display the printing progress for the user to view at any time.

In some embodiments, a protocol packet provided by a manufacturer of the electronic device 201 may also be preset in the electronic device 201, denoted as BG 1. The BG 1 may be configured for configuring a network, and may also be configured for controlling the printer to print. In this case, when a printer found by the electronic device 201 uses the BG 1, the electronic device 201 may configure a network for the foregoing printer through the preset BG 1, and may control the foregoing printer to execute the printing task through the preset BG 1. When a newly discovered printer uses another protocol packet, for example, the foregoing Mopria, X1, and X2, the electronic device 201 obtains a matched protocol packet, and configures a network for the foregoing printer through the matched protocol packet and/or controls the foregoing printer to execute the printing task.

In some embodiments, a protocol packet provided by the manufacturer of the electronic device 201 may also be preset in the electronic device 201, denoted as BG 2. BG 2 is used only for configuring a network, or is used only for controlling the printer to print.

In a case that BG 2 is used only for configuring a network, in the network configuration process, after it is determined that the printer uses BG 2, the electronic device 201 may configure a network for the foregoing printer through the preset BG 2. When the printer uses another protocol packet to configure a network, the electronic device 201 obtains a matched protocol packet, and configures a network for the foregoing printer through the foregoing matched protocol packet. In the printing process, the electronic device 201 obtains the matched protocol packet for printing, and controls the printer to print through the foregoing matched protocol packet.

In a case that BG 2 is used only for controlling the printer to print, in the network configuration process, the electronic device 201 obtains the matched protocol packet for printing, and configures a network for the foregoing printer through the foregoing matched protocol packet. In the printing process, after it is determined that the printer uses BG 2, the electronic device 201 may control the foregoing printer to print through the preset BG 2. When the printer uses another protocol packet, the electronic device 201 obtains the matched protocol packet, and control the printer to print through the foregoing matched protocol packet.

The developer platform is not limited to a printer. Alternatively, the developer platform may establish the protocol database for an electronic device 300 such as a television, a projector, a speaker box, a camera, and a robot vacuum cleaner, to record protocol types of devices of different models. After being powered on, the electronic device 300 may also broadcast a product identifier of the electronic device 300. The electronic device 201 may determine a protocol type of the electronic device based on the foregoing product identifier, and then obtains the matched protocol packet, configure a network for the electronic device 300 through the foregoing matched protocol packet, and control the electronic device 300 to execute a specific operation.

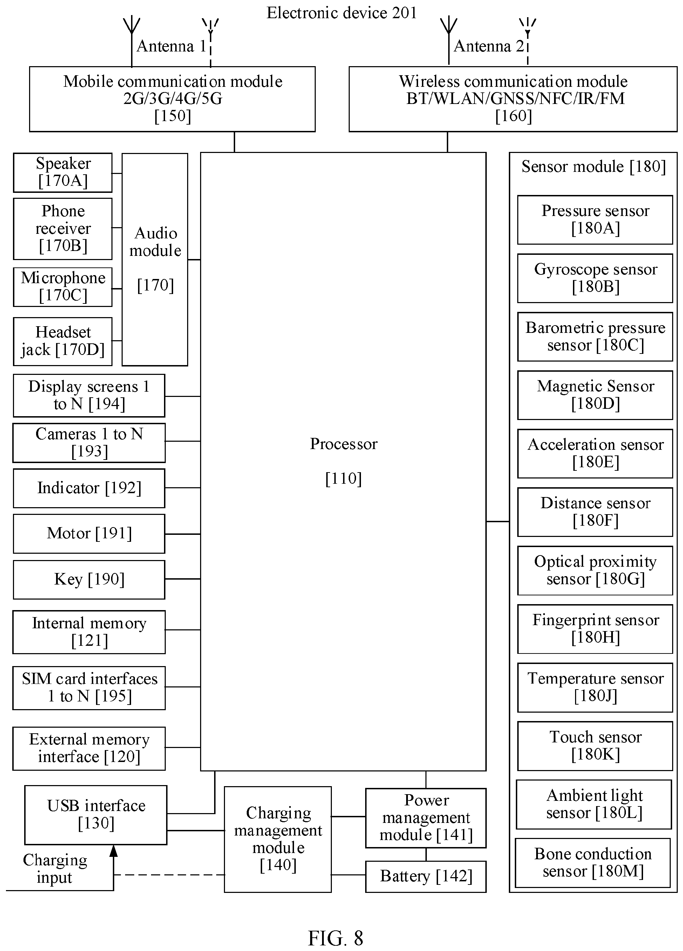

FIG. 8 is a schematic structural diagram of an electronic device 201 according to an embodiment of this application.

The electronic device 201 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a phone receiver 170B, a microphone 170C, a headset jack 170D, a sensor module 180, a key 190, a motor 191, an indicator 192, a camera 193, a display screen 194, a subscriber identification module (subscriber identification module, SIM) card interface 195, and the like. It may be understood that, the structure shown in this embodiment of the present invention does not constitute a specific limitation on the electronic device 201. In some other embodiments of this application, the electronic device 201 may include more or fewer components than those shown in the figure, or some components may be combined, or some components may be split, or components are arranged in different manners. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors. The controller may generate an operation control signal according to instruction operation code and a time-sequence signal, to complete control of fetching instructions and executing the instructions.

A USB interface 130 is an interface that complies with a USB standard specification, for example, a Mini USB interface, a Micro USB interface, and a USB Type C interface. The USB interface 130 may be configured to connect to the charger to charge the electronic device 201, or may be configured for data transmission between the electronic device 201 and a peripheral device.

The charge management module 140 is configured to receive charge input from a charger. When charging the battery 142, the charging management module 140 may further supply power to the electronic device through the power management module 141. The power management module 141 receives an input of the battery 142 and/or the charging management module 140, to supply power to the processor 110, the internal memory 121, the display screen 194, the camera 193, the wireless communication module 160, and the like.

A wireless communication function of the electronic device 201 may be implemented through the antenna 1, the antenna 2, the mobile communication module 150, the wireless communication module 160, the modem processor, the baseband processor, and the like. The mobile communication module 150 may provide a solution to wireless communication such as 2G/3G/4G/5G applied to the electronic device 201. The wireless communication module 160 may provide a solution to wireless communication applied to the electronic device 201, for example, a wireless local area network (wireless local area network, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), and an infrared (infrared, IR) technology.

In this embodiment of this application, the electronic device 201 may access a local area network through a wireless communication solution, such as WLAN, BT, NFC, or IR, provided by the wireless communication module 160, and send local area network configuration information to the printer 202.

The internal memory 121 may include one or more random access memories (random access memories, RAMs) and one or more non-volatile memories (non-volatile volatile memories, NVMs).

The random access memory may be directly read and written by the processor 110, may be configured to store executable programs (for example, machine instructions) of an operating system or other running programs, or may be configured to store data of users and applications. The non-volatile memory may also store the executable programs, the data of the users and the applications, and the like. The data stored in the non-volatile memory may be loaded into the random access memory in advance for the processor 110 to directly read and write.

Program code implementing the printer control method provided in embodiments of this application may be stored in the non-volatile memory. The electronic device 201 may read the foregoing program code from the non-volatile memory, write the program code into the processor 110, and execute the program code, thereby implementing rapid network configuration and invoking functions provided in embodiments of this application.

The external memory interface 120 may be configured to connect to an external non-volatile memory, to expand a storage capability of the electronic device 201.

The electronic device 201 implements a display function through the GPU, the display screen 194, the application processor, and the like. For example, the electronic device 201 displays user interfaces shown in FIG. 2A to FIG. 2C, FIG. 4A to FIG. 4G, and FIG. 5A to FIG. 5J.

The electronic device 201 may further implement a photographing function through the ISP, the camera 193, the video codec, the GPU, the display screen 194, the application processor, and the like.

The electronic device 201 may further implement an audio function through the audio module 170, the speaker 170A, the phone receiver 170B, the microphone 170C, the headset jack 170D, the application processor, and the like, for example, music playing or recording.

The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, and a touch sensor 180K, an ambient light sensor 180L, a bone conduction sensor 180M, and the like.

The pressure sensor 180A is configured to sense a pressure signal, and may convert the pressure signal into an electrical signal. In some embodiments, the pressure sensor 180A may be disposed on the display screen 194. When a touch operation is performed on the display screen 194, the electronic device 201 detects intensity of the touch operation based on the pressure sensor 180A. The electronic device 201 may further calculate a position of the touch based on a detection signal of the pressure sensor 180A. The gyroscope sensor 180B and the acceleration sensor 180E may be configured to determine a motion and a posture of the electronic device 201. The barometric pressure sensor 180C is configured to measure barometric pressure. The magnetic sensor 180D may be configured to detect opening and closing of a flip cover and opening and closing of a flip leather case. The distance sensor 180F is configured to measure a distance. The proximity optical sensor 180G may be configured to detect infrared reflected light from a nearby object, so as to determine that the electronic device 201 detects the nearby object. The ambient light sensor 180L is configured to perceive ambient light brightness. The fingerprint sensor 180H is configured to collect a fingerprint. The temperature sensor 180J is configured to detect a temperature. The touch sensor 180K may be disposed on the display screen 194. The touch sensor 180K and the display screen 194 form a touchscreen, which is also referred to as a "touch screen". The touch sensor 180K is configured to detect a touch operation performed on or near the touch sensor 180K, for example, tap operations shown in FIG. 2A to FIG. 2C, FIG. 4A to FIG. 4G, and FIG. 5A to FIG. 5J. A bone conduction sensor 180M may obtain a vibration signal.

The 190 includes a power-on key, a volume key, and the like. The electronic device 201 may receive a key input, and generate a key signal input related to user setting and function control of the electronic device 201. The motor 191 may generate a vibration prompt. The indicator 192 may be an indicator light, which may be configured to indicate a charging state and a battery change, and may further be configured to indicate a message, a missed call, a notification, and the like. An SIM card interface 195 is configured to connect to an SIM card.

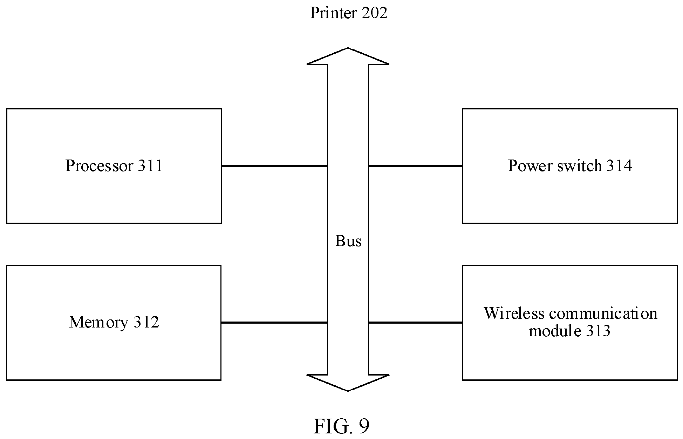

FIG. 9 is a schematic structural diagram of a printer 202 according to an embodiment of this application.

As shown in FIG. 9, the printer 202 may include components such as a processor 311, a memory 312, a wireless communication module 313, and a power switch 314. The components in the electronic device are connected to each other through a bus, and perform communication based on the bus. For details of the foregoing components, refer to descriptions of corresponding components in FIG. 8, and details are not described herein again.

In this embodiment of this application, the printer 202 may store and execute program code and/or instructions through the processor 311 and the memory 312, and communicate with an electronic device such as the electronic device 201 and the AP 100 through the wireless communication module 313, thereby implementing various functions of the printer 202, such as broadcasting a detection frame, receiving local area network configuration information, accessing the local area network, receiving execution of a target file after network access, and printing the target file.

Similarly, the schematic structural diagram shown in FIG. 9 is merely an example, and should not be construed as a specific limitation on the printer 202.

A term "user interface (user interface, UI)" in the specification, claims, and accompanying drawings of this application is a medium interface for interaction and information exchange between an application or operating system and a user, and implements conversion between an internal form of information and a form of the information acceptable to the user. The user interface of the application is source code written in a specific computer language such as java and an extensible markup language (extensible markup language, XML). The interface source code is parsed and rendered on a terminal device, and is finally presented as content that can be recognized by the user, such as a picture, a text, a button and other controls. A control (control), also referred to as a widget (widget), is a basic element of the user interface. Typical controls include a toolbar (toolbar), a menu bar (menu bar), a text box (text box), a button (button), a scrollbar (scrollbar), a picture, and a text. Attributes and content of the controls in the interface are defined by tags or nodes. For example, XML specifies the controls included in the interface through nodes such as <Textview>, <ImgView>, and <VideoView>. One node corresponds to one control or attribute in the interface, and the node is parsed and rendered, and is then presented as user-visible content. In addition, interfaces of many application programs, such as hybrid applications (hybrid application), usually further include web pages. A web page, also referred to as a page, may be understood as a special control embedded in an application interface. The web page is source code written in a specific computer language, such as a hyper text markup language (hyper text markup language, HTML), cascading style sheets (cascading style sheets, CSS), and java scripts (JavaScript, JS). The source code of the web page may be loaded and displayed by a browser or a web page display component with similar functions to the browser as content that can be recognized by the user. The specific content included in the web page is also defined by tags or nodes in the source code of the web page. For example, HTML defines elements and attributes of the web page through <p>, <img>, <video>, and <canvas>.

A graphic user interface (Graphic user interface, GUI) is a common form of the user interface, which is a graphical display of a user interface related to computer operations. The graphic user interface may be an interface element such as an icon, a window, a control displayed in the display screen of the electronic device, where the control may include visible interface elements such as an icon, a button, a menu, a tab, a text box, a dialog box, a status bar, a navigation bar, a Widget.

As used in this specification and the claims of this application, a singular expression form, "one", "a", "said", "foregoing", "the", and "this", are intended to also include a plural expression form, unless clearly indicated to the contrary in the context. It is to be understood that the term "and/or" used in this application refers to and includes any or all possible combinations of one or more listed items. As used in the foregoing embodiments, based on the context, the term "when" may be interpreted as a meaning of "if", "after", "in response to determining...", or "in response to detecting...". Similarly, based on the context, the phrase "if determining" or "if detecting (a stated condition or event)" may be interpreted as a meaning of "if determining...", "in response to determining...", "when detecting (a stated condition or event)", or "in response to detecting ... (a stated condition or event)".

All or a part of the foregoing embodiments may be implemented by software, hardware, firmware, or any combination thereof. During implementation through software, all or some of the embodiments may be implemented in a form of a computer program product. The computer program product includes one or more computer instructions. When the computer program instructions are loaded and executed on the computer, procedures or functions based on embodiments of this application are all or partially generated. The computer can be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk), or the like.

A person of ordinary skill in the art may understand that all or some of the procedures in the methods in the foregoing embodiments may be implemented by using a computer program instructing relevant hardware. The program may be stored in a computer-readable storage medium. When the program is executed, the procedures in the foregoing method embodiments may be performed. However, the foregoing storage medium includes: any medium that can store program code, such as a ROM, a random access memory RAM, a magnetic disk, or an optical disc.

## Claims

1. A printing method, applied to an electronic device, the method comprising:
displaying a first interface of a first application, wherein the first interface comprises a first icon and a second icon, the first icon corresponds to a first printer, the second icon corresponds to a second printer, the first printer corresponds to a first protocol, and the second printer corresponds to a second protocol;
loading the first protocol packet before a user operation on the first icon is detected, wherein the first protocol packet corresponds to the first protocol;
sending, after the user operation on the first icon is detected, a target file selected by a user to the first printer through the first protocol packet; and
loading, after a user operation on the second icon is detected, a second protocol packet, and sending the target file selected by the user to the second printer through the second protocol packet, wherein the second protocol packet corresponds to the second protocol.

2. The method according to claim 1, wherein before the first interface of the first application is displayed, the method further comprises: starting the first application; and
the loading a first protocol packet is specifically: loading the first protocol packet in a process of starting the first application.

3. The method according to claim 1, wherein before the first interface of the first application is displayed, the method further comprises:
discovering the first printer; and
loading, after the first printer is discovered, a third protocol packet, and sending first configuration information to the first printer through the third protocol packet, wherein the first configuration information comprises a name and a password of a local area network in which the electronic device is currently located.

4. The method according to claim 3, wherein before the third protocol packet is loaded, the method further comprises: downloading the third protocol packet from a first server, wherein the third protocol packet is different from the first protocol packet.

5. The method according to claim 3, wherein the discovering the first printer specifically comprises:
detecting a detection frame transmitted by the first printer, wherein the detection frame carries a product identifier of the first printer; and
before the third protocol packet is loaded, the method further comprises: determining, based on the product identifier, that the first printer further corresponds to a third protocol, wherein the third protocol packet corresponds to the third protocol.

6. The method according to claim 1, wherein before the first interface of the first application is displayed, the method further comprises:
discovering the second printer; and
downloading, after the second printer is discovered, the second protocol packet corresponding to the second protocol from a second server, loading the second protocol packet, and sending first configuration information to the second printer through the second protocol packet, wherein the first configuration information comprises a name and a password of a local area network in which the electronic device is currently located.

7. The method according to claim 1, wherein before the first interface of the first application is displayed, the method further comprises:
discovering the second printer; and
downloading, after the second printer is discovered, a fourth protocol packet corresponding to a fourth protocol from a third server, loading the fourth protocol packet, and sending first configuration information to the second printer through the fourth protocol packet, wherein the fourth protocol is different from the second protocol, and the first configuration information comprises a name and a password of a local area network in which the electronic device is currently located.

8. The method according to claim 1, wherein after the user operation on the first icon is detected, the method further comprises: determining the first protocol packet based on a protocol type of the first printer.

9. The method according to claim 1, wherein after the user operation on the second icon is detected, the method further comprises:
determining the second protocol packet based on a protocol type of the second printer; and
the loading a second protocol packet specifically comprises:
loading the second protocol packet from a local memory after it is determined that the local memory stores the second protocol packet.

10. The method according to claim 1, wherein the sending, after the user operation on the first icon is detected, a target file selected by a user to the first printer through the first protocol packet specifically comprises:
displaying a first floating control after the user operation on the first icon is detected;
receiving a second operation of the user after the first floating control is displayed;
displaying a second interface in response to the second operation, wherein the second interface comprises a first file, and after the second operation of the user is received and in a process of displaying the second interface, a position of the first floating control remains unchanged;
detecting a first operation on the first floating control when the first file is displayed; and
determining, in response to the first operation, the first file as the target file, and sending the target file to the first printer through the first protocol packet.

11. The method according to claim 10, wherein after the target file is sent to the first printer through the first protocol packet, the method further comprises: displaying, in the first floating control, a progress of printing the target file by the first printer.

12. The method according to claim 10, wherein before the first operation on the first floating control is detected, the method further comprises:
detecting a third operation on the first floating control; and
displaying, in the first floating control, a first control in response to the third operation; and
the detecting a first operation on the first floating control specifically comprises:
detecting the first operation on the first control in the first floating control.

13. The method according to claim 1, wherein before the second protocol packet is loaded, the method further comprises: confirming that the local memory does not store the second protocol packet, and downloading the second protocol packet from a second server.

14. The method according to claim 1, wherein the first protocol is a printing standard mopria.

15. The method according to claim 5, wherein the determining, based on the product identifier, that the first printer further corresponds to a third protocol specifically comprises:
sending the product identifier to a fourth server; and
receiving a first type sent by the first server, wherein the first type corresponds to the third protocol, and the first type is sent by the first server to the electronic device after receiving the product identifier sent by the electronic device.

16. The method according to claim 3 or 6 or 7, wherein the electronic device comprises a system setting module, the system setting module stores the first configuration information, and the first application reads the first configuration information from the system setting module.

17. The method according to claim 1, wherein the electronic device comprises a printing service, and before the first interface of the first application is displayed, the method further comprises: obtaining, by the first application, a printer list from the printing service, wherein the printer list comprises an identifier of the first printer and an identifier of the second printer.

18. The method according to claim 10, wherein the electronic device comprises a printing service, the printing service comprises the first protocol packet, and the determining, in response to the first operation, the first file as the target file, and sending the target file to the first printer through the first protocol packet specifically comprises:
determining, in response to the first operation, the first file as the target file, and sending a first request to the printing service;
creating, by the printing service, a first channel in response to the first request;
sending, by the first application, the target file to the printing service through the first channel; and
sending, by the printing service, the target file to the first printer through the first protocol packet.

19. The method according to claim 18, wherein the first request further carries a device identifier and a printing parameter of the first printer, and the printing service determines the first protocol packet based on the device identifier of the first printer; and the printing service further sends the printing parameter to the first printer through the first protocol packet.

20. A printing method, applied to an electronic device, the method comprising:
displaying a first interface of a first application, wherein the first interface comprises a second icon and a third icon, the second icon corresponds to a second printer, the third icon corresponds to a third printer, the second printer corresponds to a second protocol, and the third printer corresponds to a fifth protocol;
loading, after a user operation on the second icon is detected, a second protocol packet, and sending a target file selected by a user to the second printer through the second protocol packet, wherein the second protocol packet corresponds to the second protocol; and
loading, after a user operation on the third icon is detected, a fifth protocol packet, and sending the target file selected by the user to the third printer through the fifth protocol packet, wherein the fifth protocol packet corresponds to the fifth protocol.

21. An electronic device, comprising one or more processors and one or more memories, wherein the one or more memories are coupled to the one or more processors, the one or more memories are configured to store a computer program, and the computer program, when executed by the one or more processors, causes the electronic device to perform the method according to any one of claims 1 to 20.

22. A chip system, applied to an electronic device, wherein the chip system comprises one or more processors, and the processors are configured to invoke computer instructions to cause the electronic device to perform the method according to any one of claims 1 to 20.

23. A computer-readable storage medium, comprising a computer program, wherein the computer program, when run on an electronic device, causes the electronic device to perform the method according to any one of claims 1 to 20.
